(19) **Europäisches Patentamt / European Patent Office / Office européen des brevets**

(11) **EP 3 768 004 B1**

(12) # EUROPEAN PATENT SPECIFICATION

(45) Date of publication and mention
of the grant of the patent:
**09.07.2025 Bulletin 2025/28**

(21) Application number: **18913862.1**

(22) Date of filing: **04.04.2018**

(51) International Patent Classification (IPC):
**H04W 56/00** (2009.01)     **H04L 1/00** (2006.01)
**H04L 1/08** (2006.01)      **H04L 1/18** (2023.01)
**H04W 74/08** (2024.01)

(52) Cooperative Patent Classification (CPC):
**H04L 1/08; H04L 1/0026; H04L 1/0029;
H04L 1/189; H04W 56/00; H04W 74/0833**

(86) International application number:
**PCT/CN2018/082028**

(87) International publication number:
**WO 2019/191985 (10.10.2019 Gazette 2019/41)**

(54) **METHOD AND APPARATUS FOR TRANSMITTING AND RECEIVING INFORMATION**

VERFAHREN UND VORRICHTUNG ZUM SENDEN UND EMPFANGEN VON INFORMATIONEN

PROCÉDÉ ET APPAREIL D'ÉMISSION ET DE RÉCEPTION D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.01.2021 Bulletin 2021/03**

(73) Proprietor: **HUAWEI TECHNOLOGIES CO., LTD.
Shenzhen, Guangdong 518129 (CN)**

(72) Inventors:
• **TIE, Xiaolei**
  **Shenzhen, Guangdong 518129 (CN)**
• **LUO, Zhihu**
  **Shenzhen, Guangdong 518129 (CN)**
• **LI, Qiming**
  **Shenzhen, Guangdong 518129 (CN)**
• **JIN, Zhe**
  **Shenzhen, Guangdong 518129 (CN)**

(74) Representative: **Epping - Hermann - Fischer
Patentanwaltsgesellschaft mbH
Schloßschmidstraße 5
80639 München (DE)**

(56) References cited:
**WO-A1-2019/151819    CN-A- 107 872 869**

• **MEDIATEK INC: "CSI Reporting in Msg3 Random Access Procedure in NB-IoT", vol. RAN WG1, no. Sanya, China; 20180416 - 20180420, 3 April 2018 (2018-04-03), XP051412845, Retrieved from the Internet <URL:http://www.3gpp.org/ftp/tsg%5Fran/WG1%5FRL1/TSGR1%5F92b/Docs/> [retrieved on 20180403]**
• **CMCC: "Discussion on DL CE Level Determination Issue in NB-IoT", vol. RAN WG1, no. Athens, Greece; 20180226 - 20180302, 16 February 2018 (2018-02-16), XP051397127, Retrieved from the Internet <URL:http://www.3gpp.org/ftp/tsg%5Fran/WG1%5FRL1/TSGR1%5F92/Docs/> [retrieved on 20180216]**
• **HUAWEI ET AL: "Location of Msg2 for RACH on SCell", 3GPP DRAFT; R2-113995 LOCATION OF MSG2 FOR RACH ON SCELL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), XP050539912**

- ERICSSON: "NB-IoT - Remaining issues for NPDSCH design", vol. RAN WG1, no. Busan, Korea; 20160411 - 20160415, 6 April 2016 (2016-04-06), XP051080718, Retrieved from the Internet <URL:http://www.3gpp.org/ftp/tsg_ran/WG1_RL1/TSGR1_84b/Docs/> [retrieved on 20160406]
- VODAFONE: "Narrowband IoT", RP-160183, 3GPP TSG RAN MEETING #71, 18 November 2016 (2016-11-18), XP051657522
- "Introducing Rel-14 NB-IoT enhancements and SC-PTM for NB-IoT and eMTC", R2-1702438, 3GPP TSG-RAN WG2 MEETING #97, 17 February 2017 (2017-02-17), XP051237407
- MEDIATEK: "Clarification on NPRACH resources for UE su- pporting multi-tone Msg3", R2-168971, 3GPP TSG-RAN2 MEETING #96, 18 November 2016 (2016-11-18), XP051178559

## EP 3 768 004 B1

**Description**

## TECHNICAL FIELD

This disclosure relates to the field of mobile communications technologies, and in particular, to an information sending method, an information receiving method, and an apparatus.

## BACKGROUND

Mobile communications have profoundly changed people's life. However, people's pursuit for higher-performance mobile communications will never stop. To cope with an explosive increase of mobile data traffic, massive device connections, and various constantly emerging new services and application scenarios in the future, a fifth generation mobile communications technology (fifth generation, 5G) system emerges. As a part of 5G, the internet of things is also increasingly demanded by the market. Currently, in a 3rd generation partnership project (3rd generation partnership project, 3GPP) standard, solutions have proposed according to characteristics of the internet of things based on a cellular network. For example, a narrowband internet of things (narrow band - internet of things, NB-IoT) system carries an IoT service based on a characteristic of a narrowband technology. The NB-IoT system uses a new air interface technology that is independent of an existing cellular network (long term evolution (long term evolution, LTE)), and a terminal device requires lower costs and supports a lower rate and lower mobility.

The NB-IoT system needs to support a very large coverage area, and a base station may use completely different scheduling policies for user equipments (user equipment, UE) in different communication environments. To ensure communication reliability and save a transmit power of the base station, UEs with different channel conditions need to be differentiated, to facilitate scheduling by the base station. Therefore, a concept of coverage level is introduced into the NB-IoT system. UEs at a same coverage level have similar channel transmission conditions, the base station may use similar scheduling parameters for the UEs, and these UEs have similar control signaling overheads.

Currently, in an NB-IoT system of Rel-13 or Rel-14, a coverage level is defined as follows: A base station provides, in system information, a reference signal received power (reference signal receiving power, RSRP) decision threshold for differentiating between coverage levels. The RSRP decision threshold is mainly determined by the base station based on an uplink interference status. UE determines, based on the RSRP decision threshold, a coverage level at which the UE is located, and selects a random access resource corresponding to the coverage level during random access.

When performing scheduling for a terminal device, the base station performs scheduling based on a resource corresponding to a coverage level at which the terminal device is located. However, currently, when determining the RSRP decision threshold, the base station cannot obtain more information, and can use only the uplink interference status as a reference. Therefore, currently, the RSRP decision threshold is determined by the base station merely based on the uplink interference status. The RSRP decision threshold determined in this manner may be inaccurate, and consequently a coverage level determined by UE is also inaccurate. Therefore, the base station needs more information when performing scheduling for the terminal device.

Document "CSI Reporting in Msg3 Random Access Procedure in NB-IoT", MediaTek Inc, R1-1804144, describes metric for hypothetical NPDCCH targeting a BLER value of 1 % in Msg3 of random access procedure based on RSRP measurements, wherein the UE estimates its Coverage Enhancement (CE) level based on RSRP and chooses corresponding PRACH resource. According to this document, a typical implementation for optimizing demodulation operations of NPDCCH, the SNIR can be used for early termination of NPDCCH decoding. Since the capacity on Msg3 is limited, it is not desirable to report full accuracy RSRP-based CSI in Msg3. According to document D1, it is preferable to use a bitmap with greater than 2 bits to provide higher granularity than CE levels 0, 1, and 2 in current RA procedure and higher granularity can be used for link adaptation as early as Msg4. This document provides an explicit example for NB-IoT standalone deployment scenario for NDCCH of idle paging UE with a 3-bit mapping for NPDCCH repetitions with Rmax being up to 2048 with at most 8 candidates. Different values are provided for NPDCCH with corresponding values for SNR for the Mapping of SINR and NPDCCH repetitions for idle paging UE on certain type of Common Search Space.

Document WO 2019/151819 A1 discloses a method for CSI reporting at a UE and the corresponding UE, and relates to a communication method and system for converging a 5th-Generation (5G) communication system for supporting higher data rates beyond a 4th-Generation (4G) system with a technology for Internet of Things (IoT). The disclosure of this document may be applied to intelligent services based on the 5G communication technology and the IoT-related technology, such as smart home, smart building, smart city, smart car, connected car, health care, digital education, smart retail, security and safety services.

Huawei et al describes in "Location of Msg2 for RACH on SCell", XP050539912, various options for a message being sent on Pcell. For example, a Cell index field can be added inRAR to further distinguish the same preamble of different carriers. It is also possible to use different RA-RNTI to distinguish the same preamble of different carriers.

ERICSSON provides in "NB-IoT - Remaining issues for NPDSCH design", XP051080718, gap configuration details format and channel multiplexing aspects regarding NB-PDCCH. This document describes some proposals, for instance that two sets of gap configurations are defined for NB-IoT downlink transmission, for each configuration, the cycle starts with transmission period followed by the subframes for the gaps, and suggests some concrete realizations for gap starting point periodicity and gap size.

## SUMMARY

The present invention is defined by the set of appended claims.

## BRIEF DESCRIPTION OF DRAWINGS

FIG. 1 is a schematic diagram of a case in which R in scheduling by a network device may be less than Rmax in a random access procedure;

FIG. 2 is a schematic diagram of an application scenario according to an implementation of this disclosure;

FIG. 3 is a flowchart of a first information sending and receiving method according to an implementation of this disclosure;

FIG. 4 is a flowchart of a second information sending and receiving method according to an implementation of this disclosure;

FIG. 5 is a schematic diagram of a case in which it is assumed that a downlink channel quality report volume is not changed in a random access procedure according to an implementation of this disclosure;

FIG. 6 is a schematic diagram of a case in which a downlink channel quality report volume is updated in a random access procedure according to an implementation of this disclosure;

FIG. 7 is a flowchart of a third information sending and receiving method according to an implementation of this disclosure;

FIG. 8 is a schematic structural diagram of a communications apparatus that can implement a function of a terminal device according to an implementation of this disclosure;

FIG. 9 is a schematic structural diagram of a communications apparatus that can implement a function of a network device according to an implementation of this disclosure;

FIG. 10 is a schematic structural diagram of a communications apparatus that can implement a function of a terminal device according to an implementation of this disclosure;

FIG. 11 is a schematic structural diagram of a communications apparatus that can implement a function of a network device according to an implementation of this disclosure;

FIG. 12 is a schematic structural diagram of a communications apparatus that can implement a function of a terminal device according to an implementation of this disclosure;

FIG. 13 is a schematic structural diagram of a communications apparatus that can implement a function of a network device according to an implementation of this disclosure; and

FIG. 14A and FIG. 14B are two schematic structural diagrams of a communications apparatus that can implement a function of a network device or a terminal device according to an implementation of this disclosure.

## DESCRIPTION OF IMPLEMENTATIONS

To make the objective, technical solutions, and advantages of the implementations of this disclosure clearer, the following clearly and completely describes the technical solutions of the implementations of this disclosure with reference to the accompanying drawings in the implementations of this disclosure.

In the following, some terms in the implementations of this disclosure are explained and described, so as to help a person skilled in the art have a better understanding.

1. A terminal device includes a device that provides a user with voice and/or data connectivity, for example, may include a handheld device with a wireless connection function, or a processing device connected to a wireless modem. The terminal device may communicate with a core network via a radio access network (radio access network, RAN), to exchange voice and/or data with the RAN. The terminal device may include user equipment (user equipment, UE), a wireless terminal device, a mobile terminal device, a subscriber unit (subscriber unit), a subscriber station (subscriber station), a mobile station (mobile station), a mobile console (mobile), a remote station (remote station), an access point (access point, AP), a remote terminal device (remote terminal), an access terminal device (access terminal), a user terminal device (user terminal), a user agent (user agent), a user device (user device), or the like. For example, the terminal device may include a mobile phone (or referred to as a "cellular" phone), a computer with a mobile terminal device, a portable, pocket-sized, handheld, computer built-in, or vehicle-mounted mobile apparatus, or a smart wearable device. For example, the terminal device may be a device such as a personal communications service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device further includes a restricted device, such as a device with relatively low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

As an example rather than a limitation, in the implementations of this disclosure, the terminal device may alternatively be a wearable device. A wearable device may also be referred to as a wearable smart device, which is a collective term for wearable devices, such as glasses, gloves, watches, clothes, and shoes, that are obtained by performing intellectualized design and development on daily wear by using a wearable technology. A wearable device is a portable device worn directly on the body or integrated into clothes or an accessory of a user. A wearable device is not just a hardware device, but also implements powerful functions through software support, data exchange, and cloud-based exchange. In a broad sense, wearable smart devices include large-sized devices that have comprehensive functions and that can implement complete or some functions independent of a smartphone, for example, a smart watch or smart glasses; and include devices that are intended for only a specific type of application function and that need to be used in coordination with another device such as a smartphone, for example, various types of smart bands, smart helmets, and smart jewelry for vital sign monitoring.

2. A network device includes a base station (for example, an access point) or the like, and may specifically refer to a device in communication with a wireless terminal via one or more cells at an air interface in an access network. The network device may be configured to perform interconversion between a received over-the-air frame and an Internet Protocol (IP) packet and serve as a router between the wireless terminal and a rest portion of the access network, where the rest portion of the access network may include an IP network. The network device may coordinate attribute management of the air interface. For example, the network device may include an evolved nodeB (NodeB, eNB, e-NodeB, evolutional Node B) in a long term evolution (long term evolution, LTE) system or an LTE-advanced (LTE-Advanced, LTE-A) system, may include a next generation node B (next generation node B, gNB) in a fifth generation mobile communications technology (fifth generation, 5G) new radio (new radio, NR) system, or may include a centralized unit (centralized unit, CU) and a distributed unit (distributed unit, DU) in a cloud radio access network (CloudRAN) system. This is not limited in the implementations of this disclosure.

3. MTC (machine type communication, machine type communication) is also referred to as machine to machine (machine to machine, M2M) communication or IoT (internet of things, internet of things), and will become an important application in the communications field in the future. Future internet of things communication may mainly cover intelligent meter reading, medical detection and monitoring, logistics detection, industrial detection and monitoring, internet of vehicles, smart community, wearable device communication, and the like. An internet of vehicles industry forged based on MTC communication is considered as a fourth wave following computers, the Internet, and mobile communications networks and is a developing direction of future networks. It is estimated that a quantity of connected MTC devices will reach 50 billion by the year of 2022.

A communications system based on an existing cellular network infrastructure is an important type of MTC communications system. This type of MTC communication is usually referred to as cellular MTC or cellular IoT (referred to as CIoT for short). The 3rd generation partnership project (3rd generation partnership project, 3GPP) standardization organization has been paying close attention to development of cellular MTC and has actively carried out standardization of related technologies. To be specific, currently, a cellular MTC service mainly has the following requirements on a network and UE:

Requirement for a large coverage area: Currently available MTC services usually do not require a very high service rate, but need to be able to support a very large coverage area. The so-called large coverage area means that an MTC base station uses a relatively strong coverage enhancement technology, and a communications service is available to user equipment when a penetration loss is relatively high (20 dB). For example, user equipments in smart household and intelligent meter reading services, for example, a smart water meter and a smart electricity meter, are usually installed indoors or even in a basement. An existing cellular network technology can hardly provide a reliable communications service for devices at these locations, but an MTC base station needs to provide a stable connection service for such devices.

Very large quantity of connections: An MTC base station may serve a large quantity (exceeding tens of thousands or even hundreds of thousands) of internet of things terminal devices such as smart water/electricity meters, smart community devices, monitoring devices, vehicles, and wearable devices that are deployed on a large scale, far exceeding a currently supported quantity of mobile terminals. How to simultaneously provide a connection service to such a massive quantity of terminal devices without causing network congestion is a problem that needs to be resolved. Low costs (low cost): Costs of an MTC terminal device needs to be lower than costs of an existing mobile terminal, and low costs are prerequisites for volume deployment of MTC devices.

Low power consumption (low power consumption): Because of diversified actual application and various deployment environments of MTC terminal devices, the MTC terminal devices are usually powered by using batteries. However, replacing batteries for such a massive quantity of devices consumes enormous manpower costs and time costs. Therefore, functional components of an MTC device usually need to have an extremely low power consumption level, so that the device can have a longer standby time, thereby reducing a quantity of times of battery replacement.

4. NB-IoT: Currently, the 3GPP standard is conducting research on how to fully leverage characteristics of a narrowband technology by designing a new air interface based on a cellular network to carry an IoT service. Such an IoT is referred to as an NB-IoT. Compared with those in a conventional cellular network, services and terminal devices in an NB-IoT system have the following characteristics:

(1) Low rate and long period of a service: In comparison with the conventional cellular network, an NB-IoT service generates smaller data packets and is usually latency-insensitive.
(2) Requirement for massive connections: An NB-IoT base station may serve a large quantity of internet of things terminal devices such as smart water/electricity meters, smart home devices, vehicles, and wearable devices that are deployed on a large scale. For example, the quantity may exceed tens of thousands.
(3) Requirement for low costs: Costs of terminal devices in the NB-IoT system need to be lower than those of existing terminal devices in a cellular network, to implement volume deployment of the terminal devices. The requirement for low costs necessitates very low implementation complexity of the terminal devices.
(4) Requirement for low power consumption: The NB-IoT system requires that the terminal devices have lower power consumption, to save battery power of the terminal devices and ensure ultra-long standby time of the terminal devices, thereby reducing manpower costs for replacing batteries.

To meet the foregoing requirements for low costs, deep coverage, and the like, the NB-IoT system has many specific designs. For example, the NB-IoT system does not use PUCCHs, to simplify the terminal devices and reduce costs. In addition, to implement deep coverage, a control channel (such as a narrowband physical downlink control channel (narrow physical downlink control channel, NPDCCH)) and a data channel (such as a narrowband physical downlink shared channel (narrow physical downlink shared channel, NPDSCH) or a narrowband physical uplink shared channel (narrow physical uplink shared channel, NPDSCH)) of the NB-IoT system use a manner of repeated sending, in which same content is sent repeatedly for hundreds of times, to improve a possibility that a terminal device with relatively poor coverage receives the content successfully.

5. Random access procedure: A random access procedure is a procedure that starts when a terminal device sends a random access preamble (preamble) to start to attempt to access a network, until a basic signaling connection with a network device is set up. Random access is a key step in a mobile communications system, and is also the last step by which the terminal device establishes a communications link with the network device. For example, the terminal device exchanges information with the network device in the random access procedure, to complete a subsequent operation such as calling, resource requesting, or data transmission. In addition, the terminal device may further implement uplink time synchronization with the system through random access.

Random access procedures may be classified into a contention-based random access procedure and a contention-free random access procedure. The implementations of this disclosure are mainly described by using the contention-based random access procedure as an example.

The contention-based random access procedure generally may include four steps:

Step 1: A terminal device sends a random access preamble to a network device, and the network device receives the random access preamble from the terminal device, where the random access preamble is also referred to as a first message (MSG1) in the random access procedure.
Step 2: The network device sends a random access response (random access response, RAR) message to the terminal device, and the terminal device receives the RAR message from the network device, where the RAR message is also referred to as a second message (MSG2) in the random access procedure.
Step 3: The terminal device sends, to the network device, uplink signaling for setting up a radio resource control (radio resource control, RRC) connection; and the network device receives the uplink signaling from the terminal device. The uplink signaling is also referred to as a third message (MSG3) in the random access procedure. The uplink signaling may usually include an RRC signaling part, a media access control control element (media access control control element, MAC CE), and the like. The RRC signaling may vary with scenarios, and is, for example, an RRC connection setup request, an RRC re-setup request, or an RRC recovery request.
Step 4: The network device sends an RRC connection setup message to the terminal device, and the terminal device receives the RRC connection setup message from the network device, where the RRC connection setup message is also referred to as a fourth message (MSG4) in the random access procedure.

6. A coverage level is also referred to as a coverage enhancement level. To ensure communication reliability and reduce a transmit power of a base station, UEs with different channel conditions need to be differentiated, to facilitate scheduling by the base station. Therefore, a concept of coverage level is introduced to the NB-IoT system. UEs at a same coverage level have similar channel transmission conditions. The base station uses similar scheduling parameters for the UEs, and the UEs also have similar control signaling overheads. For example, the NB-IoT system may define three coverage levels. A coverage level of UE that is relatively close to the base station is "common coverage", and a number of repetitions is zero; a coverage level of UE that is relatively far away from the base station is "edge coverage", and a number of repetitions is medium; and a coverage level of UE in a scenario such as a basement is "extended coverage", and a number of repetitions may be up to several hundreds or even tens of hundreds. UE selects a coverage level based on a measured RSRP, and selects a proper quantity of transmissions based on the coverage level. This can reduce unnecessary repetitions, thereby reducing power overheads.

7. Currently, a base station configures an NPRACH resource separately for an anchor carrier (anchor carrier) and a non-anchor carrier (non-anchor carrier). For example, the base station broadcasts NPRACH resource information of the anchor carrier on a system information block (system information block, SIB) 2-NB, and a downlink (DL) carrier corresponding to an uplink (UL) anchor carrier is definitely a downlink anchor carrier. The downlink anchor carrier may be an NB-IoT carrier that includes a narrowband physical broadcast channel (narrowband physical broadcast channel, NPBCH), an NB-SIB 1, a narrowband primary synchronization signal (narrowband primary synchronization signal, NPSS), and a narrowband secondary synchronization signal (narrowband secondary synchronization signal, NSSS), that is, a carrier obtained by a terminal device through initial network search.

The base station delivers configuration information of a series of non-anchor carriers in a SIB22-NB, including configurations of a series of downlink non-anchor carriers and a series of uplink non-anchor carriers. It can be learned from the following configurations that an NPRACH resource is configured on each uplink non-anchor carrier based on a coverage level, and an indicator npdcch-CarrierIndex-r14 may be configured for each NPRACH resource. The indicator is used to indicate a downlink carrier corresponding to the NPRACH resource; and the downlink carrier is used to send an NPDCCH that is retransmitted corresponding to an MSG2 and an MSG3, and send an NPDCCH and an NPDSCH NPDCCH that are retransmitted corresponding to an MSG4, where the MSG2, the MSG3, and MSG4 correspond to an MSG1 on the NPRACH resource. It can be further learned that a variable npdcch-NumRepetitions-RA-r14 is configured for each NPRACH resource, and is used to represent a maximum number of repetitions corresponding to common search space (common search space, CSS) of a downlink control channel of the downlink carrier, where the maximum number of repetitions is represented as Rmax. The downlink carrier is denoted as a first carrier, and is a downlink carrier on which the MSG2 in the random access procedure is located. A corresponding downlink carrier for sending the MSG2 is configured for each NPRACH resource corresponding to the MSG1. The downlink carrier is the first carrier. In other words, the first carrier may also be construed as a downlink carrier configured for a random access resource corresponding to the MSG1.

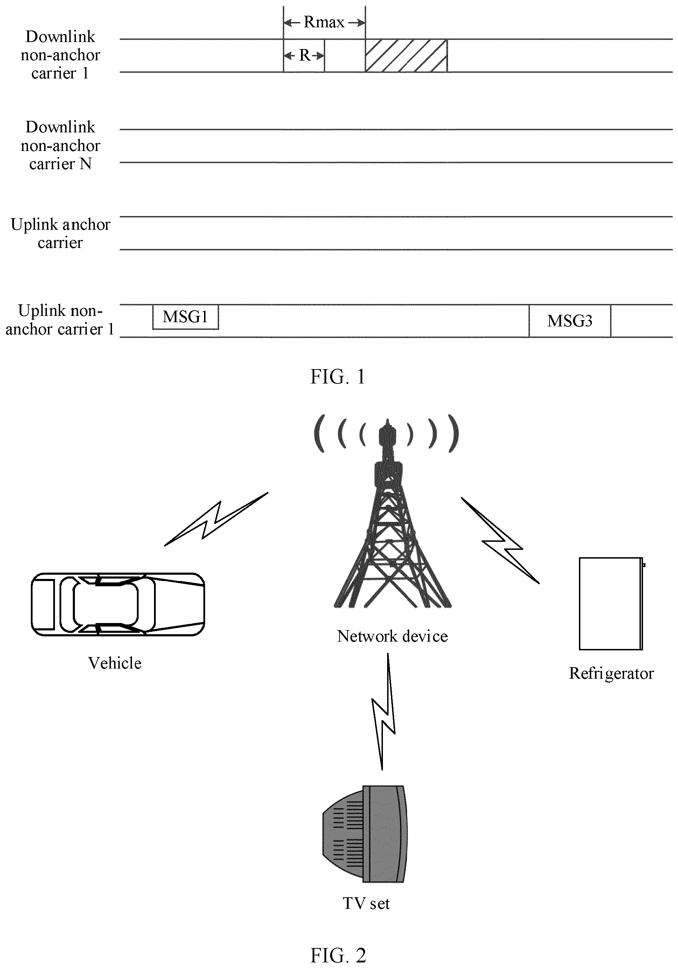

In addition, an Rmax parameter is also configured for the anchor carrier by using a SIB2. Rmax represents a maximum number of repetitions, of a downlink control channel carried on the anchor carrier, in common search space in which the downlink control channel is located; and therefore has a meaning similar to that of Rmax in the non-anchor carrier. FIG. 1 is an example. In this example, a terminal device selects an NPRACH resource on an uplink non-anchor carrier 1 for sending an MSG1, and a SIB22 indicates that a downlink carrier corresponding to the uplink non-anchor carrier 1 is a downlink non-anchor carrier 1. Although the SIB22 indicates Rmax, during actual scheduling by a base station, R may be less than Rmax, in other words, actually R is used instead of Rmax, where R represents a number of repetitions of a downlink control channel that is used for scheduling for an MSG2 and that is actually sent in common search space in which a downlink control channel carried on a first carrier is located, that is, an actual quantity of retransmissions of the MSG2. Alternatively, this can be construed as follows: R represents a number of repetitions of the downlink control channel carried on the first carrier, the downlink control channel is used for scheduling for the MSG2, and the first carrier is a downlink carrier on which the MSG2 is located. As shown in FIG. 1, R is less than Rmax. In actual application, R is less than or equal to Rmax, and R is indicated in downlink control information (DCI) carried on the downlink control channel. The downlink control channel is, for example, an NPDCCH. In addition, a shaded part in FIG. 1 represents an NPDSCH.

8. Block error rate may be abbreviated as BLER, and may have other names. A BLER is a percentage of error blocks in all sent blocks. For example, the BLER may be equal to any one of {$x\times10e$-1, $x\times10e$-2, $x\times10e$-3, $x\times10e$-4, $x\times10e$-5, $x\times10e$-6, $x\times10e$-7, $x\times10e$-8, $x\times10e$-9}, or may be equal to another value, where 10e-1=$10^{-1}$=0.1, and this formula is also applicable to other values of the BLER. x is a positive integer, for example, x=1 or 5, or x may be equal to another value. It can be understood that the BLER may be replaced by a correctness percentage, and the correctness percentage may be equal to any one of {1-$x\times1e$-1, 1-$x\times1e$-2, 1-$x\times1e$-3, 1-$x\times1e$-4, 1-$x\times1e$-5, 1-$x\times1e$-6, 1-$x\times1e$-7, 1-$x\times1e$-8, or 1-$x\times1e$-9}.

9. A downlink control channel is used to carry control information. Channels included by the downlink control channel are not limited in this specification. For example, the downlink control channel includes a physical downlink control channel (physical downlink control channel, PDCCH) or an NPDCCH, and may further include other downlink control channels that are used to transmit control information.

10. A power headroom (power headroom, PH) is a difference between a maximum transmit power allowed by a terminal device and a currently evaluated transmit power of a physical uplink shared channel (physical uplink shared channel, PUSCH). The power headroom represents an amount of transmit power still available to the terminal device except the transmit power currently used for transmitting the PUSCH, and can be used as a reference for uplink resource allocation performed by a base station. However, algorithm design based on such a reference, or in other words, how the PH affects scheduling by the base station, is determined by an algorithm of each device vendor. For example, if the PH has a negative value, it represents that a current PUSCH transmit power has exceeded the maximum transmit power allowed by the terminal device, and less uplink resources may be allocated to the terminal device during next scheduling; and if the PH has a positive value, more uplink resources may be allocated subsequently.

In NB-IoT release 13 and release 14, a PH is carried in an MSG3 for transmission and occupies 2 bits.

When reporting the PH, the terminal device actually reports a power headroom level. Currently, there are four power headroom levels in total, and each power headroom level corresponds to a corresponding power headroom value. For the power headroom levels, refer to Table 1.

**Table 1**

| PH | Power headroom level (Power Headroom Level) |
|----|---------------------------------------------|
| 0  | POWER_HEADROOM_0                            |
| 1  | POWER_HEADROOM_1                            |
| 2  | POWER_HEADROOM_2                            |
| 3  | POWER_HEADROOM_3                            |

In Table 1, PH 0 to PH 3 represent serial numbers of the four power headroom levels. For example, a power headroom level corresponding to PH 0 is POWER_HEADROOM_0. In addition, for correspondences between the power headroom levels and power headrooms, refer to Table 2.

Table 2

| Reported value (Reported value) | Measured value (Measured quantity value) (dB) |
|---------------------------------|-----------------------------------------------|
| POWER_HEADROOM_0                | $[-54] \leq PH < 5$                           |
| POWER_HEADROOM_1                | $5 \leq PH < 8$                               |
| POWER_HEADROOM_2                | $8 \leq PH < 11$                              |
| POWER_HEADROOM_3                | $PH \geq 11$                                  |

In Table 2, a reported value represents a power headroom level in Table 1, and a measured value represents a power headroom corresponding to a power headroom level. For example, a power headroom range corresponding to the power headroom level POWER_HEADROOM_0 is $[-54]$ dB $\leq PH < 5$ dB. After determining a power headroom, the terminal device may select a power headroom level corresponding to the power headroom, and send the power headroom level to a network device. The network device can determine the power headroom of the terminal device based on the received power headroom level and Table 2.

There are only four power headroom levels in the foregoing, and a power headroom range corresponding to each power headroom level is relatively large. As a result, a granularity of reporting by the terminal device is relatively coarse, and the power headroom determined by the network device is inaccurate. Therefore, it is proposed in release 15 that a PH granularity be refined to introduce more power headroom levels. Power headrooms with more power headroom levels introduced into release 15 are subsequently referred to as enhancement PHs.

10. The terms "system" and "network" may be used interchangeably in the implementations of this disclosure. "A plurality of" means two or more. In view of this, in the implementations of this disclosure, "a plurality of" may also be construed as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects, unless otherwise stated.

In addition, unless otherwise stated, ordinal numbers such as "first" and "second" mentioned in the implementations of this disclosure are used to differentiate between a plurality of objects, but are not intended to limit an order, a time sequence, priorities, or importance of the plurality of objects.

While the foregoing describes some concepts in the implementations of this disclosure, the following describes the technical background of the implementations of this disclosure.

An NB-IoT system needs to support a very large coverage area, and a base station may use completely different scheduling policies for UEs in different communication environments. For example, UE located at a central location of a cell has relatively good wireless channel conditions; and the base station can set up a reliable communications link at a relatively low power, and can complete data transmission rapidly by using technical means such as a large transport code block, higher order modulation, and carrier binding. In contrast, UE located at an edge of a cell or in a basement has relatively poor wireless channel quality; and the base station may need to use relatively high power to maintain a link, and can complete data transmission only by using technologies such as a small code block, lower order modulation, a plurality of retransmissions, and a spread spectrum in a data transmission process.

To ensure communication reliability and save a transmit power of the base station, UEs with different channel conditions need to be differentiated, to facilitate scheduling by the base station. Therefore, a concept of coverage level is introduced into the NB-IoT system. UEs at a same coverage level have similar channel transmission conditions, the base station may use similar scheduling parameters for the users, and these UEs have similar control signaling overheads.

Currently, in an NB-IoT system of release (Rel)-13 or Rel-14, a coverage level is defined as follows: A base station provides, in system information, an RSRP decision threshold for differentiating between coverage levels. The RSRP decision threshold is mainly determined by the base station based on an uplink interference status. Provided that an RSRP is higher than the RSRP decision threshold, a preamble (preamble) sequence of an MSG1 sent by a terminal device is detected by the base station in a preset probability.

To be specific, an NB-IoT terminal device determines its coverage level according to the following process:

1. The terminal device obtains an RSRP value (value) through measurement based on a narrowband reference signal (narrowband reference signal, NRS) sent on a downlink NB-IoT carrier, where the RSRP value directly reflects a transmission loss of a wireless signal from a base station to the terminal device.

2. The terminal device compares the measured RSRP value with several RSRP decision thresholds, and determines its coverage level based on a result of the comparison. The RSRP decision thresholds are delivered by using a system message. In an NB-IoT system, currently, a maximum of two RSRP decision thresholds can be delivered. In the following example, two RSRP decision thresholds (an RSRP decision threshold 1 and an RSRP decision threshold 2) are delivered, where the RSRP decision threshold 2 is less than the RSRP decision threshold 1. If the RSRP value obtained through measurement by the terminal device is less than the RSRP decision threshold 2, the terminal device is at a coverage level 2 (corresponding to extended coverage). If the RSRP value obtained through measurement by the terminal device is greater than the RSRP decision threshold 2 and less than the RSRP decision threshold 1, the terminal device is at a coverage level 1 (corresponding to edge coverage). If the RSRP value obtained through measurement by the terminal device is greater than the RSRP decision threshold 1, the terminal device is at a coverage level 0 (corresponding to common coverage). The base station configures different narrowband physical random access channel (narrowband physical random access channel, NPRACH) resources based on different coverage levels. Configuration information of an NPRACH resource includes information such as: a number of repetitions of an NPRACH format; configuration information of common search space of downlink control channels for scheduling for an MSG2, retransmission of an MSG3, and an MSG 4; and corresponding downlink carrier information.

3. The terminal device sends the MSG1 on an NPRACH resource corresponding to the determined coverage level. For different coverage levels, the terminal device selects a corresponding NPRACH resource for sending the MSG1, thereby ensuring performance of receiving an uplink NPRACH.

Currently, a base station sets an RSRP decision threshold based on an uplink interference status, mainly considering that performance of receiving an uplink NPRACH preamble should be ensured as far as possible. However, in actual network deployment, an interference level of uplink receiving of a base station is different from a downlink interference level of a terminal device. If an RSRP decision threshold is determined based on only an uplink interference status, the determined RSRP decision threshold may be inaccurate. For example, the base station determines the RSRP decision threshold based on the uplink interference status. For example, uplink interference may be relatively high, and the base station sets the RSRP decision threshold to a relatively large value. In this case, most terminal devices each may be located at a level with poor coverage and send a preamble for a plurality of times. However, downlink interference of some terminal devices may not be high, but these terminal devices each are located at a level with poor coverage. In this case, the base station also performs downlink scheduling for these terminal devices based on NPRACH resources corresponding to the coverage levels at which these terminal devices are located.

As a result, a plurality of downlink retransmissions also need to be performed, causing waste of resources. Alternatively, uplink interference may be relatively low, and the base station sets the RSRP decision threshold to a relatively small value. In this case, most terminal devices each may be located at a level with good coverage and send a preamble for a relatively small quantity of times. However, downlink interference of some terminal devices may be relatively high, but these terminal devices each are located at a level with good coverage. In this case, the base station also performs downlink scheduling for these terminal devices based on NPRACH resources corresponding to the coverage levels at which these terminal devices are located. As a result, a quantity of downlink retransmissions is also relatively small, causing a failure in downlink receiving.

It can be learned that currently, a base station performs uplink and downlink scheduling for a terminal device based on only a coverage level at which the terminal device is located, so that a scheduling result is inaccurate.

In view of this, in technical solutions provided in the implementations of this disclosure, when performing scheduling for a terminal device, in addition to considering a coverage level at which the terminal device is located, a network device may further consider conditions such as downlink channel quality of the terminal device, so that the network device can perform scheduling for the terminal device in a more proper manner. This helps reduce waste of resources and improve resource utilization.

The foregoing describes the technical background of the implementations of this disclosure. FIG. 2 is a schematic diagram of an application scenario according to an implementation of this disclosure.

FIG. 2 shows a network device and a plurality of terminal devices. These terminal devices are terminal devices in an NB-IoT system, and include a refrigerator, a vehicle, a TV set, and the like. For example, the network device is an access network device such as a base station. The network device and the at least one terminal device shown in FIG. 2 may be configured to implement the technical solutions provided in the implementations of this disclosure.

With reference to the accompanying drawings, the following describes the technical solutions provided in the implementations of this disclosure. In all the examples for description below, the technical solutions provided in the implementations of this disclosure are applied to the application scenario shown in FIG. 2. Actual application is certainly not limited thereto.

An implementation of this disclosure provides an information sending and receiving method. In this method, a terminal device may send downlink channel quality information to a network device by using an MSG3 in a random access procedure. In this way, when determining an RSRP decision threshold, in addition to considering an uplink interference status, the network device may further consider a downlink channel quality status, so that an ultimately determined RSRP decision threshold is more accurate.

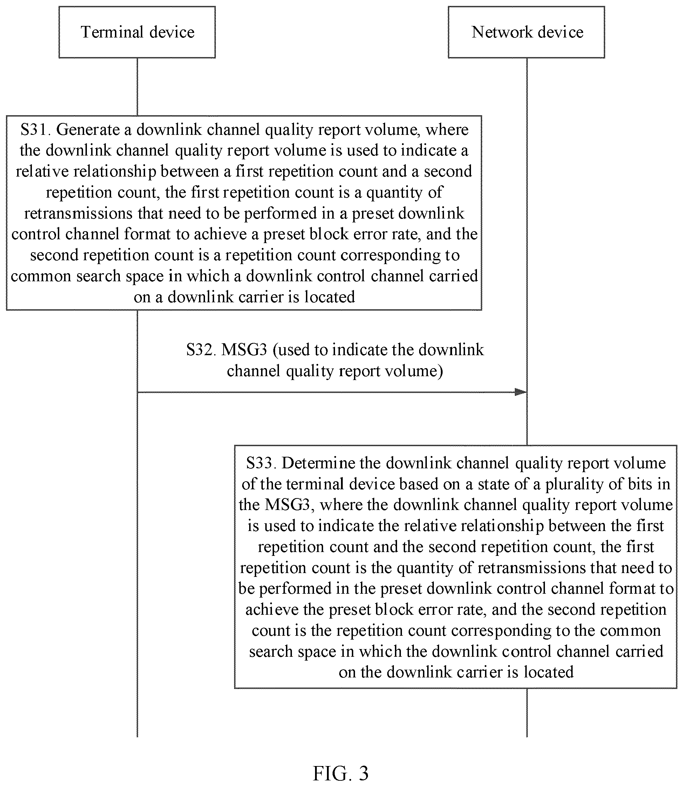

FIG. 3 is a flowchart of a first information sending and receiving method according to an implementation of this disclosure.

S31. A terminal device generates a downlink channel quality report volume, where the downlink channel quality report volume is used to indicate a relative relationship between a first number of repetitions and a second number of repetitions, the first number of repetitions is a quantity of retransmissions that need to be performed in a preset downlink control channel format to achieve a preset block error rate, and the second number of repetitions is a number of repetitions corresponding to common search space of a downlink control channel carried on a downlink carrier. The second number of repetitions may also be construed as a number of repetitions, corresponding to the downlink control channel carried on the downlink carrier, in the common search space of the downlink control channel.

To generate the downlink channel quality report volume, the terminal device needs to obtain the first number of repetitions and the second number of repetitions. How the terminal device obtains the first number of repetitions is described first.

In this implementation of this disclosure, the terminal device may preset a mapping relationship between a signal to interference plus noise ratio (signal to interference plus noise Ratio, SINR) and a number of repetitions. For example, the mapping relationship includes several items, and each item represents that one SINR is associated with one number of repetitions. The mapping relationship may be obtained on the premise that a block error rate is ensured to reach a preset block error rate. One item in the mapping relationship is used for description. This can be construed as follows: One item represents a quantity of retransmissions that need to be performed in the preset downlink control channel format to achieve the preset block error rate, and the quantity corresponds to one SINR. For example, the terminal device may set the mapping relationship by using a simulation process under a preset condition. The preset block error rate is, for example, 1%, or may be another value.

For example, for the preset condition of the terminal device, refer to Table 3.

**Table 3**

| Attribute (Attribute) | Downlink channel quality (Downlink channel quality) | |
|---|---|---|
| Downlink control information (DCI) format (format) | Format N1 | Format N1 |
| Quantity of information bits (Number of information bits) | 23 bits | 23 bits |
| System bandwidth (System Bandwidth) | 200 kHz | 200 kHz |
| Antenna configuration (Antenna configuration) | 2x1 | 2x1 |
| Aggregation level (Aggregation level) | 2 | 2 |
| Discontinuous reception (discontinuous reception, DRX) | Off (OFF) | OFF |

For example, a preset downlink control channel format is the format (format) N1 shown in Table 3.

The foregoing preset condition is merely an example, and this implementation of this disclosure does not exclude other preset conditions.

In this implementation of this disclosure, the terminal device may measure a downlink SINR, and query the preset mapping relationship after obtaining the SINR, to determine a number of repetitions corresponding to the SINR. The terminal device may obtain the first number of repetitions by performing measurement on different carriers.

Before sending an MSG1 in a random access procedure, that is, before the random access procedure starts, the terminal device may perform measurement on a downlink anchor carrier, to obtain the first number of repetitions. For example, before sending the MSG1 in the random access procedure, the terminal device measures an SINR of the downlink anchor carrier. For example, the SINR is referred to as a first SINR. In this case, the terminal device determines the first number of repetitions based on the SINR of the anchor carrier. Specifically, before sending the MSG1 in the random access procedure, the terminal device performs measurement on the downlink anchor carrier by using a reference signal. For example, the reference signal is an NRS. Alternatively, this can be construed as follows: Before sending the MSG1, the terminal device receives the NRS on the downlink anchor carrier, performs measurement based on the NRS to obtain the first SINR, and then can determine the first number of repetitions based on the SINR and the preset mapping relationship.

It is also possible thatr, after sending an MSG1 in a random access procedure, that is, after the random access procedure starts, the terminal device may perform measurement on a downlink carrier on which an MSG2 in the random access procedure is located, that is, a downlink carrier for sending the MSG2 in the random access procedure, to obtain the first number of repetitions. The terminal device sends the MSG1 by using a selected random access resource. In this implementation of this disclosure, the random access resource is, for example, an NPRACH resource. Before sending the MSG1, the terminal device first needs to select an NPRACH resource. For example, the terminal device selects, based on configurations in a SIB2 and a SIB22 in a preset probability, an uplink carrier for sending the MSG1. After selecting the uplink carrier, the terminal device can determine, based on the configuration in the SIB2 or the SIB22, a downlink carrier corresponding to the uplink carrier, that is, determine the downlink carrier on which the MSG2 is located. For example, after sending the MSG1 in the random access procedure, the terminal device measures an SINR of the downlink carrier on which the MSG2 is located. For example, the SINR is referred to as a second SINR. In this case, the terminal device can obtain the first number of repetitions based on the second SINR. Specifically, after sending the MSG1 in the random access procedure, the terminal device performs measurement, by using a reference signal, on the downlink carrier on which the MSG2 is located. For example, the reference signal is an NRS. Alternatively, this can be construed as follows: Before sending the MSG1, the terminal device receives the NRS on a downlink anchor carrier, performs measurement based on the NRS to obtain the second SINR, and then can determine the first number of repetitions based on the SINR and the preset mapping relationship.

Whether the terminal device determines the first number of repetitions by performing measurement on the anchor carrier or determines the first number of repetitions by performing measurement on the downlink carrier on which the MSG2 is located may be stipulated by a protocol, or may be notified to the terminal device by a network device. This is not specifically limited.

While the foregoing describes how the terminal device obtains the first number of repetitions, the following describes how the terminal device obtains the second number of repetitions.

As described above, the second number of repetitions is the number of repetitions, corresponding to the downlink control channel carried on the downlink carrier, in the common search space in which the downlink control channel is located. The downlink carrier herein may vary. For example, the downlink carrier may be an anchor carrier, or the downlink carrier may be a first carrier. The first carrier is a downlink carrier configured for a random access resource corresponding to the MSG1 in the random access procedure. Alternatively, this can be construed as follows: The first carrier is a downlink carrier for sending the MSG2. During obtaining of the second number of repetitions, whether the downlink carrier is an anchor carrier or a downlink carrier on which the MSG2 is located may be stipulated by a protocol, or may be notified to the terminal device by the network device. This is not specifically limited. In this case, the second number of repetitions may vary with the downlink carrier.

If the downlink carrier is an anchor carrier, the second number of repetitions may be a maximum number of repetitions corresponding to common search space of a downlink control channel carried on the anchor carrier. This can be construed as follows: The second number of repetitions is a maximum number of repetitions, of the downlink control channel carried on the anchor carrier, in the common search space in which the downlink control channel is located. In other words, if the downlink carrier is an anchor carrier, the terminal device may determine the maximum number of repetitions, of the downlink control channel carried on the anchor carrier, in the common search space in which the downlink control channel is located, as the second number of repetitions, thereby obtaining the downlink channel quality report volume based on the first number of repetitions and the second number of repetitions.

The maximum number of repetitions, of the downlink control channel carried on the anchor carrier, in the common search space in which the downlink control channel is located is the Rmax parameter of the anchor carrier described above. The terminal device can obtain the Rmax parameter based on the configuration in the SIB2.

Alternatively, if the downlink carrier is a first carrier, the second number of repetitions may be a maximum number of repetitions corresponding to common search space of a downlink control channel carried on the first carrier. This can be construed as follows: The second number of repetitions is a maximum number of repetitions, of the downlink control channel carried on the first carrier, in the common search space in which the downlink control channel is located. In other words, if the downlink carrier is a first carrier, the terminal device may determine the maximum number of repetitions, of the downlink control channel carried on the first carrier, in the common search space in which the downlink control channel is located, as the second number of repetitions, thereby obtaining the downlink channel quality report volume based on the first number of repetitions and the second number of repetitions.

Depending on configuration information in an NPRACH resource, the first carrier may be an anchor carrier, or may be a non-anchor carrier. The maximum number of repetitions, of the downlink control channel carried on the first carrier, in the common search space in which the downlink control channel is located is the Rmax parameter of the first carrier described above. When the first carrier is an anchor carrier, the terminal device can obtain the Rmax parameter based on the SIB2. When the first carrier is a non-anchor carrier, the terminal device can obtain the Rmax parameter based on the SIB22.

Alternatively, if the downlink carrier is a first carrier, the second number of repetitions may be a number of repetitions of a downlink control channel carried on the first carrier, where the downlink control channel is used for scheduling for the MSG2. Alternatively, this can be construed as follows: The second number of repetitions is a number of repetitions of the downlink control channel that is used for scheduling for the MSG2 and that is actually sent in common search space in which the downlink control channel carried on the first carrier is located. In other words, if the downlink carrier is a first carrier, the terminal device can determine, as the second number of repetitions, the number of repetitions of the downlink control channel that is carried on the first carrier and that is used for scheduling for the MSG2, thereby obtaining the downlink channel quality report volume based on the first number of repetitions and the second number of repetitions.

Depending on configuration information in an NPRACH resource, the first carrier may be an anchor carrier, or may be a non-anchor carrier. The number of repetitions of the downlink control channel that is carried on the first carrier and that is used for scheduling for the MSG2 is the R parameter of the first carrier described above. For example, the terminal device may receive, from the network device on the first carrier, downlink control information (downlink control information, DCI) carried on the downlink control channel that is used for scheduling for the MSG2; and obtain the R parameter based on the DCI. Specifically, after sending the MSG1, the terminal device listens to type2-NPDCCH common search space (type2-PDCCH common search space) in a random access response (random access response, RAR) window (window) of the downlink carrier configured for the random access resource corresponding to the MSG1. If detecting an NPDCCH that is masked by using a corresponding random access radio network temporary identity RA-RNTI (random access radio network temporary identity), the terminal device reads a corresponding NPDSCH; and learns, through parsing, whether an MSG2 on the NPDSCH includes a random access preamble identifier (random access preamble identifier, RAPID) corresponding to the terminal device. If there is a corresponding RAPID, the terminal device processes a corresponding RAR, and determines a sending resource and a sending time for an MSG3. In this process, the terminal device can read downlink control information (downlink control information, DCI) that is carried on the NPDCCH and that is used to schedule the NPDSCH, to obtain an actual sending number of repetitions, that is, R, corresponding to the NPDCCH.

Whether the second number of repetitions is the number of repetitions of the downlink control channel that is carried on the first carrier and that is used for scheduling for the MSG2, or is the maximum number of repetitions, of the downlink control channel carried on the first carrier, in the common search space in which the downlink control channel is located may be stipulated by a protocol, or may be notified to the terminal device by the network device. This is not specifically limited.

While the foregoing describes how the terminal device obtains the first number of repetitions and the second number of repetitions, the following describes how the terminal device obtains the downlink channel quality report volume based on the first number of repetitions and the second number of repetitions.

In this implementation of this disclosure, the downlink channel quality report volume may be in different forms. For example, the downlink channel quality report volume may be a quantized value of a ratio between the first number of repetitions and the second number of repetitions. Alternatively, the downlink channel quality report volume may be a quantized value of a converted-to value, where the converted -to value is a value obtained by converting a ratio between the first number of repetitions and the second number of repetitions. This can be construed as follows: The relative relationship is used to represent the value obtained by converting the ratio between the first number of repetitions and the second number of repetitions, and the downlink channel quality report volume is the quantized value of the value obtained through conversion. Certainly, these two forms are merely examples. In this implementation of this disclosure, a specific form, a name, and the like of the downlink channel quality report volume are not limited, provided that the downlink channel quality report volume can indicate the relative relationship between the first number of repetitions and the second number of repetitions.

Because the downlink channel quality report volume may be in different forms, a manner in which the terminal device obtains the downlink channel quality report volume also varies. The manners are separately described below.

A. Manner 1

In manner 1, the downlink channel quality report volume is the quantized value of the ratio between the first number of repetitions and the second number of repetitions. This can be construed as follows: In manner 1, the relative relationship between the first number of repetitions and the second number of repetitions is used to represent the ratio between the first number of repetitions and the second number of repetitions, and the downlink channel quality report volume is the quantized value of the ratio.

In this case, the terminal device may obtain the downlink channel quality report volume in the following manner: The terminal device calculates the ratio between the first number of repetitions and the second number of repetitions; and the terminal device selects, from a preset value list, a quantized value corresponding to the ratio, where the quantized value is the downlink channel quality report volume. The quantized value that is in the value list and that corresponds to the ratio may be a quantized value that is in the value list and that has a smallest difference with the ratio. Alternatively, there may be another correspondence manner.

The first number of repetitions is represented as Q. For example, the second number of repetitions is Rmax of the downlink anchor carrier or Rmax of the downlink carrier on which the MSG2 is located. In this case, the terminal device may calculate a ratio between Q and Rmax, that is, Q/Rmax. After obtaining the ratio, the terminal device selects, from the preset value list, a quantized value having a smallest difference with the ratio. The quantized value is used to represent the downlink channel quality report volume, that is, represent downlink channel quality of the terminal device. The value list may be stipulated by a protocol, or may be preset by the network device and sent to the terminal device. This is not

$$\left\{ \frac{1}{2^K}, \frac{2}{2^K}, \frac{3}{2^K}, ..., \frac{2^K-1}{2^K} \right\}$$

specifically limited. For example, the value list is $\quad$ , or for example, the value list is $\{2^{(-2K)}, 2^{-(2K+1)}, ..., 2^{-1}\}$, where K is a quantity of a plurality of bits in the MSG3, or K is a quantity of bits in the MSG3 that are used to indicate the downlink channel quality report volume. For example, the plurality of bits include idle bits in the MSG3. However, it should be noted that because the plurality of bits have been used in this implementation of this disclosure, and the plurality of bits are assigned with an actual meaning, the plurality of bits can no longer be considered as "idle bits". Therefore, the so-called "idle bits" herein represent only a meaning of these bits before they are used in this implementation of this disclosure.

Alternatively, the first number of repetitions is represented as Q. For example, the second number of repetitions is R of the downlink anchor carrier or R of the downlink carrier on which the MSG2 is located. In this case, the terminal device may calculate a ratio between Q and R, that is, Q/R. After obtaining the ratio, the terminal device selects, from the preset value list, a quantized value having a smallest difference with the ratio. The quantized value is used to represent the downlink channel quality report volume, that is, represent downlink channel quality of the terminal device. For descriptions of the value list, refer to the descriptions above.

B. Manner 2

In manner 2, the relative relationship between the first number of repetitions and the second number of repetitions is used to represent the value obtained by converting the ratio between the first number of repetitions and the second number of repetitions, and the downlink channel quality report volume is the quantized value of the value obtained through conversion.

In an optional manner, the terminal device may obtain the downlink channel quality report volume in the following manner: The terminal device calculates a first ratio, where the first ratio is a ratio between the first number of repetitions and a power factor, and the power factor is a ratio between an NRS power of the downlink carrier corresponding to the random access resource configured for the MSG1 in the random access procedure and an NRS power of the downlink anchor carrier. In this case, the terminal device calculates a second ratio, where the second ratio is a ratio between the first ratio and the second number of repetitions. The terminal device selects, from the preset value list, a quantized value corresponding to the second ratio, where the quantized value is the downlink channel quality report volume. The quantized value that is in the value list and that corresponds to the second ratio may be a quantized value that is in the value list and that has a smallest difference with the second ratio. Alternatively, there may be another correspondence manner.

The first number of repetitions is represented as Q. For example, the second number of repetitions is Rmax of the downlink anchor carrier or Rmax of the downlink carrier on which the MSG2 is located. The terminal device may calculate a ratio between Q and P, that is, Q/P, namely the first ratio, where P represents the power factor, and a value of P may be sent to the terminal device by the network device. After obtaining the first ratio, the terminal device may calculate the second ratio, that is, a ratio between the first ratio and Rmax, namely first ratio/Rmax, to obtain the second ratio. In other words, the terminal device calculates Q/P/Rmax, to obtain the second ratio. After obtaining the second ratio, the terminal device selects, from the preset value list, a quantized value having a smallest difference with the second ratio, where the quantized value is used to represent the downlink channel quality report volume, that is, represent downlink channel quality of the terminal device. For details about the value list, refer to related descriptions in manner 1. Details are not described herein again.

Alternatively, the first number of repetitions is represented as Q. For example, the second number of repetitions is R of the downlink carrier on which the MSG2 is located. The terminal device may calculate a ratio between Q and P, that is, Q/P, namely the first ratio, where P represents the power factor, and a value of P may be sent to the terminal device by the network device. After obtaining the first ratio, the terminal device may calculate the second ratio, that is, a ratio between the first ratio and R, namely first ratio/R, to obtain the second ratio. In other words, the terminal device calculates Q/P/R, to obtain the second ratio. After obtaining the second ratio, the terminal device selects, from the preset value list, a quantized value having a smallest difference with the second ratio, where the quantized value is used to represent the downlink channel quality report volume, that is, represent downlink channel quality of the terminal device. For details about the value list, refer to related descriptions in manner 1. Details are not described herein again.

In another optional manner, the terminal device may obtain the downlink channel quality report volume in the following manner: The terminal device calculates a first ratio, where the first ratio is a ratio between the first number of repetitions and the second number of repetitions. In this case, the terminal device calculates a second ratio, where the second ratio is a ratio between the first ratio and a power factor, and the power factor is a ratio between an NRS power of the downlink carrier corresponding to the random access resource configured for the MSG1 in the random access procedure and an NRS power of the downlink anchor carrier. The terminal device selects, from the preset value list, a quantized value corresponding to the second ratio, where the quantized value is the downlink channel quality report volume. The quantized value that is in the value list and that corresponds to the second ratio may be a quantized value that is in the value list and that has a smallest difference with the second ratio. Alternatively, there may be another correspondence manner.

The first number of repetitions is represented as Q. For example, the second number of repetitions is Rmax of the downlink anchor carrier or Rmax of the downlink carrier on which the MSG2 is located. The terminal device may calculate a ratio between the first number of repetitions and the second number of repetitions, that is, first number of repetitions/second number of repetitions (or represented as Q/Rmax), namely the first ratio. After obtaining the first ratio, the terminal device may calculate the second ratio, that is, a ratio between the first ratio and P, namely first ratio/P, to obtain the second ratio, where P represents the power factor, and a value of P may be sent to the terminal device by the network device. In other words, the terminal device calculates Q/Rmax/P, to obtain the second ratio. After obtaining the second ratio, the terminal device selects, from the preset value list, a quantized value having a smallest difference with the second ratio, where the quantized value is used to represent the downlink channel quality report volume, that is, represent downlink channel quality of the terminal device. For details about the value list, refer to related descriptions in manner 1. Details are not described herein again.

Alternatively, the first number of repetitions is represented as Q. For example, the second number of repetitions is R of the downlink carrier on which the MSG2 is located. The terminal device may calculate a ratio between Q and R, that is, Q/R, to obtain the first ratio. After obtaining the first ratio, the terminal device may calculate the second ratio, that is, a ratio between the first ratio and P, namely first ratio/P, to obtain the second ratio, where P represents the power factor, and a value of P may be sent to the terminal device by the network device. In other words, the terminal device calculates Q/R/P, to obtain the second ratio. After obtaining the second ratio, the terminal device selects, from the preset value list, a quantized value having a smallest difference with the second ratio, where the quantized value is used to represent the downlink channel quality report volume, that is, represent downlink channel quality of the terminal device. For details about the value list, refer to related descriptions in manner 1. Details are not described herein again.

The foregoing describes two different manners of calculating the downlink channel quality report volume by the terminal device. Manner 1 is applicable to a case in which the terminal device determines the first number of repetitions by using the downlink anchor carrier, and is also applicable to a case in which the terminal device determines the first number of repetitions by using the downlink carrier on which the MSG2 is located; while manner 2 is mainly applicable to a case in which the terminal device determines the first number of repetitions by using the downlink anchor carrier. Application of manner 2 can be construed as follows: The terminal device determines the first number of repetitions by performing measurement on the downlink anchor carrier, but a downlink control channel that carries information such as the MSG2 and that is actually received by the terminal device may not be the downlink control channel used by the terminal device to determine the first number of repetitions. Therefore, to reduce an error, a concept of power factor may be introduced, and power compensation is performed by using the power factor. Alternatively, this can be construed as being equivalent to the following: The first number of repetitions determined based on the downlink anchor carrier is converted into the first number of repetitions determined based on the downlink carrier on which the MSG2 is located, so that the finally determined first number of repetitions is more accurate and the downlink channel quality report volume obtained through calculation is also more accurate. Specifically, if the terminal device determines the first number of repetitions by using the downlink anchor carrier, whether the terminal device determines the downlink channel quality report volume in manner 1 or manner 2 may be stipulated by a protocol, or may be notified to the terminal device by the network device. This is not limited in this implementation of this disclosure.

In addition, in this implementation of this disclosure, after obtaining the downlink channel quality report volume, the terminal device may perform evaluation, to determine whether to report the downlink channel quality this time. For example, a preset range may be set in advance, or a channel quality threshold may be set in advance. If the downlink channel quality report volume obtained through calculation by the terminal device is within the preset range, or the downlink channel quality report volume obtained through calculation by the terminal device is greater than or equal to the preset channel quality threshold, the terminal device determines to indicate the downlink channel quality report volume to the network device by using the MSG3. Alternatively, if the downlink channel quality report volume obtained through calculation by the terminal device is outside the preset range, or the downlink channel quality report volume obtained through calculation by the terminal device is less than the preset channel quality threshold, the terminal device determines not to report the downlink channel quality report volume this time. This can be construed as follows: When the downlink channel quality report volume obtained through calculation is outside the preset range, or the downlink channel quality report volume obtained through calculation is less than the preset channel quality threshold, it indicates that the downlink channel quality of the terminal device is relatively good. In this case, little impact may be created even if the network device does not consider the downlink channel quality of the terminal device when determining an RSRP decision threshold. Therefore, in this case, the terminal device may choose not to report the downlink channel quality report volume. The preset range or the channel quality threshold may be stipulated by a protocol, or may be notified to the terminal device by the network device. This is not specifically limited. Alternatively, if the downlink carrier corresponding to the random access resource used by the terminal device to send the MSG1 is a non-anchor carrier, the terminal device may also determine not to report the downlink channel quality this time.

S32. The terminal device sends the MSG3 to the network device in the random access procedure, where the MSG3 is used to indicate the downlink channel quality report volume; and the network device receives the MSG3.

After obtaining the downlink channel quality report volume through calculation, the terminal device may set a state of the plurality of bits in the MSG3 based on the downlink channel quality report volume. The plurality of bits in the MSG3 herein are bits, in the MSG3, that may be used to indicate the downlink channel quality report volume. One value of the plurality of bits represents one state, and one state may correspond to one downlink channel quality report volume. For example, a correspondence between values in the value list of quantized values and states of the plurality of bits may be set in advance. The correspondence may be stipulated by a protocol, or may be set by the network device and notified to the terminal device by the network device. This is not specifically limited. After learning of the correspondence between the values in the value list of quantized values and the states of the plurality of bits and obtaining the downlink channel quality report volume through calculation, the terminal device can set the state of the plurality of bits to a state corresponding to the downlink channel quality report volume obtained through calculation. In this case, the terminal device may send the MSG3 to the network device.

In this implementation of this disclosure, the plurality of bits in the MSG3 not only can indicate the downlink channel quality report volume, but also can be used to indicate that the terminal device does not support reporting of the downlink channel quality, or indicate that the terminal device does not report the downlink channel quality report volume this time. For example, the plurality of bits in the MSG3 are set to a state. For example, the state is a state in which all of the plurality of bits are set to 0, and it is specified that if the state of the plurality of bits is an all-zeroed state, it indicates that the terminal device does not support reporting of the downlink channel quality, or it indicates that the terminal device does not report the downlink channel quality this time. Another state of the plurality of bits, that is, a non-all-0 state, can be used to indicate a corresponding downlink channel quality report volume. In this case, if the terminal device determines that the terminal device does not support reporting of the downlink channel quality or determines not to report the downlink channel quality this time, the terminal device may set the plurality of bits in the MSG3 to an all-0 state. However, if the terminal device obtains the downlink channel quality report volume through calculation, determines that the terminal device supports reporting of the downlink channel quality, and determines to report the downlink channel quality this time, the terminal device may set the plurality of bits to a corresponding state based on the downlink channel quality report volume. In this case, the state of the plurality of bits is a non-all-zeroed state.

Alternatively, the plurality of bits may be set to another relatively special state than the all-0 state that is relatively special. For example, the state is referred to as a preset state. A value of the plurality of bits that corresponds to the state is not limited in this implementation of this disclosure. For example, the state is a state in which all of the plurality of bits are set to 1, or a state in which the plurality of bits are set to another value. The state may be used to indicate that the terminal device does not report the downlink channel quality report volume this time, or the state may be used for future extended application.

The so-called future extended application means that the preset state is reserved in current design. The reserved state does not represent any function or indicator in the current design, but is used by a new terminal device when a new extension bit is introduced in the future, to instruct the network device to check the new extension bit, thereby supporting an extended function.

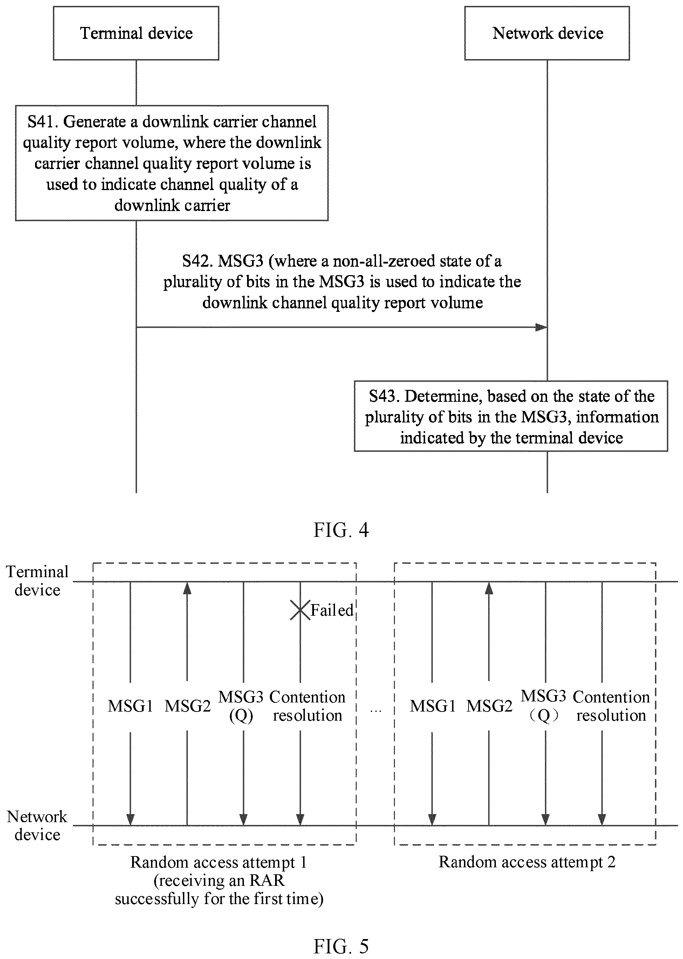

In addition, the MSG3 sent by the terminal device not only includes bits of a radio resource control (radio resource control, RRC) layer, but also includes bits of a media access control (media access control, MAC) layer. In this case, the bits used by the terminal device to indicate the downlink channel quality report volume may be the bits of the RRC layer, or may be the bits of the MAC layer. Related content will be detailed in the implementation shown in FIG. 4 below, and therefore, is not described herein. For details, refer to related descriptions in the implementation shown in FIG. 4.

S33. The network device determines the downlink channel quality report volume of the terminal device based on the state of the plurality of bits in the MSG3.

The network device also knows the correspondence between the values in the value list of quantized values and the states of the plurality of bits. After the network device receives the MSG3, if the state of the plurality of bits is a non-all-0 state, or if a preset state is set additionally, but the state of the plurality of bits is a non-preset state (that is, not the preset state), the network device may query the correspondence based on the state of the plurality of bits, to determine the downlink channel quality report volume sent by the terminal device, thereby learning of the downlink channel quality of the terminal device.

After obtaining the downlink channel quality report volume, the network device may determine, based on the downlink channel quality report volume, a number of repetitions of the NPDCCH used for scheduling for the terminal device and a number of repetitions and an MCS of the NPDSCH used for scheduling for the terminal device, so that the MCS and the number of repetitions during downlink scheduling are more adapted to the signal to interference plus noise ratio of the terminal device. In other words, when performing scheduling for the terminal device, in addition to considering a coverage level at which the terminal device is located, the network device may further consider a downlink channel quality status of the terminal device, so that scheduling for the terminal device by the network device is more proper and more adapted to an actual status of the terminal device.

For example, the network device determines the RSRP decision threshold based on an uplink interference status. For example, uplink interference may be relatively high, and the network device sets the RSRP decision threshold to a relatively large value. In this case, most terminal devices each may be at a level with poor coverage and send a preamble for a relatively large quantity of times. However, downlink interference of some terminal devices may not be high, and some of these terminal devices each indicate a downlink channel quality report volume to the network device. In this case, during subsequent scheduling for the terminal devices, in addition to considering the coverage levels at which the terminal devices are located, the network device may further consider downlink channel quality of the terminal devices. In this way, the network device does not perform scheduling repeatedly for an excessively large quantity of times for downlink transmission of the terminal device, thereby reducing waste of resources.

Alternatively, uplink interference may be relatively low, and the network device sets the RSRP decision threshold to a relatively small value. In this case, most terminal devices each may be located at a level with relatively poor coverage, and send a preamble repeatedly for a relatively small quantity of times. However, downlink interference of some terminal devices may be relatively high, and some of these terminal devices each indicate a downlink channel quality report volume to the network device. In this case, during subsequent scheduling for the terminal devices, in addition to considering the coverage levels at which the terminal devices are located, the network device may further consider downlink channel quality of the terminal devices. In this way, the network device may perform scheduling repeatedly for a relatively large quantity of times for downlink transmission of the terminal device, to ensure as far as possible that downlink transmission of these terminal devices can succeed, thereby improving a success rate of downlink transmission.

The network device may receive downlink channel quality report volumes sent by a plurality of terminal devices. In this case, the network device determines, based on the downlink channel quality report volume sent by each terminal device, an MSG4 in a random access procedure, a number of repetitions of a downlink NPDCCH after the MSG4 is received, and a combination of an MCS and a number of repetitions of an NPDSCH after the MSG4 is received. The foregoing only uses one terminal device as an example. If a plurality of terminal devices each need to send a downlink channel quality report volume to the network device, a process in which each of the plurality of terminal devices generates a downlink channel quality report volume and a manner of sending the downlink channel quality report volume are similar to those described above. For details, refer to related descriptions above.

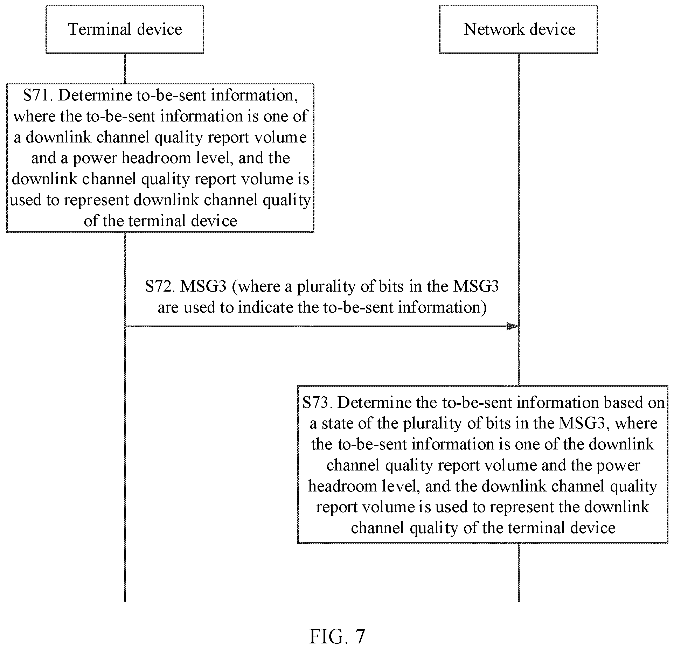

In addition, considering that the MSG3 not only may be used to indicate the downlink channel quality report volume, but also may be used to indicate a power headroom level of an enhanced PH, if a quantity of the idle bits in the MSG3 is less than a sum of a quantity of bits used to indicate the downlink channel quality report volume and a quantity of bits used to indicate the power headroom level of the enhanced PH, a mechanism for determining how the MSG3 indicates the downlink channel quality report volume and the power headroom level of the enhanced PH is needed. Related content will be detailed in the implementation shown in FIG. 7, and therefore, is not described herein. For details, refer to related descriptions in the implementation shown in FIG. 7 below.

In this implementation of this disclosure, the downlink channel quality report volume can be obtained and indicated to the network device, so that the network device can learn of downlink receiving performance of the terminal device based on the downlink channel quality report volume indicated by the MSG3, thereby determining the number of repetitions that is of the NPDCCH and that corresponds to the downlink receiving performance of the terminal device, or determining the MCS and the number of repetitions that are of the NPDSCH and that correspond to the downlink receiving performance of the terminal device. The downlink receiving performance of the terminal device is related to a downlink signal to interference plus noise ratio of the terminal device and a receiving capability of a downlink receiver of the terminal device.

In addition, in this implementation of this disclosure, the downlink channel quality report volume is used to indicate the relative relationship between the first number of repetitions and the second number of repetitions. This is equivalent that downlink channel quality information of the terminal device is represented by a quantized value. Compared with direct sending of the first number of repetitions, sending of the quantized value requires far fewer bits. This helps save transmission resources. In addition, a quantity of bits that are in the MSG3 and that can be used to indicate the downlink channel quality report volume is also limited. According to the technical solution in this implementation of this disclosure, an objective of indicating the downlink channel quality report volume by using the limited bits in the MSG3 can also be achieved, thereby improving resource utilization.

As described above, the terminal device can indicate the downlink channel quality report volume to the network device, so that the network device can learn of the downlink channel quality of the terminal device. The terminal device indicates the downlink channel quality report volume to the network device by using the MSG3. The following uses another implementation to describe how the terminal device indicates the downlink channel quality to the network device by using the MSG3.

How to obtain the downlink channel quality information on the premise that the downlink channel quality information is sent by using the MSG3 is a problem that needs to be resolved. Currently, an NB-IoT system supports sending of an MSG1 on an anchor carrier or a non-anchor carrier. Correspondingly, a downlink carrier for sending an MSG2 that corresponds to the MSG1 may be an anchor carrier or a non-anchor carrier. However, on the other hand, currently, an NB-IoT terminal device performs measurement only on an anchor carrier. Therefore, when the downlink carrier for sending the MSG2 is a non-anchor carrier, the downlink channel quality information reported by the MSG3 cannot reflect an actual channel quality level of scheduling for an MSG4 of the terminal device by the network device and an actual channel quality level of a downlink carrier on which another downlink NPDSCH is located. Therefore, there is a possibility that the downlink channel quality information in the MSG3 does not correspond to or match actual downlink channel quality of a downlink carrier used by the terminal device.

To resolve this technical problem, FIG. 4 describes a second information sending and receiving method according to an implementation of this disclosure.

S41. A terminal device generates a downlink carrier channel quality report volume, where the downlink carrier channel quality report volume is used to represent channel quality of a downlink carrier.

In this implementation of this disclosure, the terminal device may obtain the downlink carrier channel quality report volume by performing measurement on the downlink carrier. This can be construed as follows: The terminal device performs measurement on the downlink carrier, to obtain a quantity of retransmissions that need to be performed in a preset downlink control channel format to achieve a preset block error rate, where the downlink channel quality report volume is determined based on the quantity of retransmissions. For example, the quantity of retransmissions is referred to as a first quantity of retransmissions.

The downlink carrier may vary. For example, the downlink carrier may be a downlink anchor carrier, or the downlink carrier may be a carrier for sending an MSG2 in a random access procedure. A manner in which the terminal device obtains a first number of repetitions varies with the downlink carrier. The following describes how the terminal device obtains the first number of repetitions.

In this implementation of this disclosure, the terminal device may preset a mapping relationship between an SINR and a number of repetitions. For example, the mapping relationship includes several items, and each item represents that one SINR is associated with one number of repetitions. The mapping relationship may be obtained on the premise that a block error rate is guaranteed to reach a preset block error rate. One item in the mapping relationship is used for description. This can be construed as follows: One item represents a quantity of retransmissions that need to be performed in the preset downlink control channel format to achieve the preset block error rate, and the quantity corresponds to one SINR. For example, the terminal device may set the mapping relationship by using a simulation process under a preset condition. The preset block error rate is, for example, 1%, or may be another value.

For example, for the preset condition of the terminal device, refer to Table 3 in the implementation shown in FIG. 3. Certainly, the preset condition is merely an example, and this implementation of this disclosure does not exclude other preset conditions.

In this implementation of this disclosure, the terminal device may measure a downlink SINR, and query the preset mapping relationship after obtaining the SINR, to determine a number of repetitions corresponding to the SINR, that is, the first number of repetitions. The terminal device may obtain the first number of repetitions by performing measurement on different downlink carriers.

In an optional manner, the downlink carrier is a downlink anchor carrier. According to the present invention, before sending an MSG1 in the random access procedure, that is, before the random access procedure starts, the terminal device performs measurement on the downlink anchor carrier, to obtain the first number of repetitions. For example, before sending the MSG1 in the random access procedure, the terminal device measures an SINR of the downlink anchor carrier. For example, the SINR is referred to as a first SINR. In this case, the terminal device determines the first number of repetitions based on the SINR of the anchor carrier. Specifically, before sending the MSG1 in the random access procedure, the terminal device performs measurement on the downlink anchor carrier by using a reference signal. For example, the reference signal is an NRS. Alternatively, this can be construed as follows: Before sending the MSG1, the terminal device receives the NRS on the downlink anchor carrier, performs measurement based on the NRS to obtain the first SINR, and then can determine the first number of repetitions based on the first SINR and the preset mapping relationship.

The downlink carrier is a carrier for sending the MSG2 in the random access procedure. Alternatively, according to the present invention, after sending the MSG1 in the random access procedure, that is, after the random access procedure starts, the terminal device performs measurement on the downlink carrier on which the MSG2 in the random access procedure is located, that is, a downlink carrier for sending the MSG2 in the random access procedure, to obtain the first number of repetitions. The terminal device sends the MSG1 by using a selected random access resource. In this implementation of this disclosure, the random access resource is, for example, an NPRACH resource. Before sending the MSG1, the terminal device first needs to select an NPRACH resource. For example, the terminal device selects, based on configurations in a SIB2 and a SIB22 in a preset probability, an uplink carrier for sending the MSG1. After selecting the uplink carrier, the terminal device can determine, based on the configuration in the SIB2 or the SIB22, a downlink carrier corresponding to the uplink carrier, that is, determine the downlink carrier on which the MSG2 is located. For example, after sending the MSG1 in the random access procedure, the terminal device measures an SINR of the downlink carrier on which the MSG2 is located. For example, the SINR is referred to as a second SINR. In this case, the terminal device can obtain the first number of repetitions based on the second SINR. Specifically, after sending the MSG1 in the random access procedure, the terminal device performs measurement, by using a reference signal, on the downlink carrier on which the MSG2 is located. For example, the reference signal is an NRS. Alternatively, this can be construed as follows: Before sending the MSG1, the terminal device receives the NRS on a downlink anchor carrier, performs measurement based on the NRS to obtain the second SINR, and then can determine the first number of repetitions based on the second SINR and the preset mapping relationship.

Whether the terminal device determines the first number of repetitions by performing measurement on the anchor carrier or determines the first number of repetitions by performing measurement on the downlink carrier on which the MSG2 is located may be stipulated by a protocol, or may be notified to the terminal device by a network device. This is not specifically limited.

In this implementation of this disclosure, a method used by the terminal device to generate the downlink carrier channel quality report volume is not limited, or in other words, a specific form of the downlink carrier channel quality report volume is not limited. For example, the terminal device may directly determine the first number of repetitions as the downlink carrier channel quality report volume. Alternatively, the terminal device may generate the downlink carrier channel quality report volume in the manner described in the implementation shown in FIG. 3. In other words, in addition the first number of repetitions, the terminal device further obtains the second number of repetitions described in the implementation shown in FIG. 3. For a specific manner of obtaining the second number of repetitions, refer to the manner described in the implementation shown in FIG. 3. The terminal device obtains the downlink carrier channel quality report volume based on the first number of repetitions and the second number of repetitions. For a manner of obtaining the downlink carrier channel quality report volume, also refer to the manner of obtaining the downlink channel quality report volume by the terminal device described in the implementation shown in FIG. 3. Alternatively, the terminal device may generate the downlink carrier channel quality report volume in another manner, provided that the downlink carrier channel quality report volume can reflect the channel quality of the downlink carrier. S42. The terminal device sends an MSG3 to the network device in the random access procedure, and the network device receives the MSG3.

The terminal device generates the MSG3, and sends the MSG3 to the network device. A non-all-0 state of a plurality of bits in the MSG3 is used to indicate the downlink carrier channel quality report volume.

S43. The network device determines, based on the state of the plurality of bits in the MSG3, information indicated by the terminal device, where when the plurality of bits in the MSG3 are in a non-all-0 state, the network device determines the downlink carrier channel quality report volume.

Certainly, the terminal device first sends the MSG1 to the network device, and the network device receives the MSG1; the network device sends the MSG2 to the terminal device, and the terminal device receives the MSG2; and then the terminal device sends the MSG3 to the network device.

The terminal device indicates the downlink carrier channel quality report volume to the network device by using the plurality of bits in the MSG3. For example, one value of the plurality of bits is considered as one state of the plurality of bits. In this case, different states of the plurality of bits may correspond to different downlink carrier channel quality report volumes. For example, the terminal device may obtain N channel quality thresholds in advance, determine N+1 channel quality intervals based on the N channel quality thresholds, and determine that the N+1 channel quality intervals are in a one-to-one correspondence with N+1 states of the plurality of bits, where all the N+1 states are non-all-0 states. Each channel quality interval includes at least one downlink carrier channel quality report volume. Certainly, a form of the downlink carrier channel quality report volume included in the channel quality interval varies with a form of the downlink carrier channel quality report volume. In this case, after obtaining the downlink carrier channel quality report volume, the terminal device may determine a channel quality interval, of the N+1 channel quality intervals, into which the downlink carrier channel quality report volume falls; and after determining the channel quality interval, may set the state of the plurality of bits to a state corresponding to the channel quality interval into which the downlink carrier channel quality report volume falls. For example, the terminal device determines that the downlink carrier channel quality report volume falls into a first channel quality interval of the N+1 channel quality intervals, and a state of the plurality of bits that corresponds to the first channel quality interval is a first state. In this case, the terminal device sets the state of the plurality of bits in the MSG3 to the first state, and then sends the MSG3 to the network device. After receiving the MSG3, the network device determines that the state of the plurality of bits is the first state. In this case, the network device can determine that the downlink carrier channel quality report volume of the terminal device falls into the first channel quality interval, that is, determine the downlink carrier channel quality report volume of the terminal device.

The N channel quality thresholds may be configured by the network device. In this case, a manner in which the terminal device obtains the N channel quality thresholds is that: the terminal device receives the N channel quality thresholds configured by the network device. Alternatively, the N channel quality thresholds may be stipulated by a protocol. This is not specifically limited. In addition, accuracy of the channel quality that is of the downlink carrier and that is determined by the network device improves as a value of N increases.

For another example, one value of the plurality of bits is considered as one state of the plurality of bits. In this case, different states of the plurality of bits may correspond to different downlink carrier channel quality report volumes. For example, the terminal device may obtain N channel quality thresholds in advance, and determine N channel quality intervals based on the N channel quality thresholds, where the $X^{th}$ (X=1, 2, 3, ..., N) channel quality interval corresponds to an interval that is less than or equal to the $X^{th}$ channel quality threshold and greater than or equal to the $(X-1)^{th}$ channel quality threshold. The terminal device may determine that the N channel quality intervals are in a one-to-one correspondence with N states of the plurality of bits, and all the N states are non-all-0 states. Each channel quality interval includes at least one downlink carrier channel quality report volume. Certainly, a form of the downlink carrier channel quality report volume included in the channel quality interval varies with a form of the downlink carrier channel quality report volume. In this case, after obtaining the downlink carrier channel quality report volume, the terminal device may determine a channel quality interval, of the N channel quality intervals, into which the downlink carrier channel quality report volume falls; and after determining the channel quality interval, may set the state of the plurality of bits to a state corresponding to the channel quality interval into which the downlink carrier channel quality report volume falls. For example, the terminal device determines that the downlink carrier channel quality report volume falls into a first channel quality interval of the N channel quality intervals, and a state of the plurality of bits that corresponds to the first channel quality interval is a first state. In this case, the terminal device sets the state of the plurality of bits in the MSG3 to the first state, and then sends the MSG3 to the network device. After receiving the MSG3, the network device determines that the state of the plurality of bits is the first state. In this case, the network device can determine that the downlink carrier channel quality report volume of the terminal device falls into the first channel quality interval, that is, determine the downlink carrier channel quality report volume of the terminal device. The N channel quality thresholds may be configured by the network device. In this case, a manner in which the terminal device obtains the N channel quality thresholds is that: the terminal device receives the N channel quality thresholds configured by the network device. Alternatively, the N channel quality thresholds may be stipulated by a protocol. This is not specifically limited. In addition, accuracy of the channel quality that is of the downlink carrier and that is determined by the network device improves as a value of N increases.

In a specific example, the N thresholds in this implementation are Rmax values that correspond to one to three coverage levels and that are broadcast by a network device. For example, if a base station has configured three coverage levels, Rmax values corresponding to the three coverage levels are used as three thresholds, and three corresponding channel quality intervals are respectively $(0-R_{max,CE0})$, $(R_{max,CE0}, R_{max,CE1})$, and $(R_{max,CE1}, R_{max,CE2})$, where CE0, CE1, and CE2 represent the three coverage levels in ascending order in terms of quality. In this example, the plurality of bits in the MSG3 are 2 bits, where an all-zeroed state is '00', and the three non-all-zeroed states respectively correspond to the three channel quality intervals.

In another example, one value of the plurality of bits is considered as one state of the plurality of bits. In this case, different states of the plurality of bits may correspond to different coverage levels. For example, if a base station has configured three coverage levels, Rmax values corresponding to the three coverage levels are respectively $R_{max,CE0}$, $R_{max,CE1}$, and $R_{max,CE2}$, where CE0, CE1, and CE2 represent the three coverage levels in ascending order in terms of quality. In this implementation, the plurality of bits in the MSG3 are 2 bits, where an all-zeroed state is '00', and the three non-all-zeroed states respectively represent that downlink channel report volumes are $R_{max,CE0}$, $R_{max,CE1}$, and $R_{max,CE2}$; or $(0-R_{max,CE0})$, $(R_{max,CE0}, R_{max,CE1})$, and $(R_{max,CE1}, R_{max,CE2})$.

In the foregoing manner of this implementation, when a carrier for sending the MSG1 is an anchor carrier, a downlink carrier for sending the MSG2 is also a downlink anchor carrier. In this case, the terminal device performs measurement on the anchor carrier, to obtain channel quality information of the anchor carriers, for determining an MSG4 for which scheduling is to be performed subsequently on the anchor carrier and determining number of repetitions and MCSs for subsequent transmission of a PDCCH and a PDSCH. This resolves a problem that reported channel quality information does not match channel quality of the downlink carrier of the MSG4 and channel quality of a downlink carrier on which the PDCCH and the PDSCH are subsequently located.

In the foregoing manner of this implementation, when a carrier for sending the MSG1 is a non-anchor carrier, a downlink carrier for sending the MSG2 may be a downlink anchor carrier or may be a downlink non-anchor carrier. In this case, after sending the MSG1, the terminal performs measurement on the downlink carrier for sending the MSG2 to obtain downlink channel quality, and reports the downlink channel quality by using the MSG3, for determining an MSG4 for which scheduling is to be performed subsequently on an anchor carrier and determining number of repetitions and MCSs for subsequent transmission of a PDCCH and a PDSCH. This resolves a problem that reported channel quality information does not match channel quality of the downlink carrier of the MSG4 and channel quality of a downlink carrier on which the PDCCH and the PDSCH are subsequently located.

In this implementation of this disclosure, the plurality of bits in the MSG3 not only can indicate the downlink carrier channel quality report volume, but also can be used to indicate that the terminal device does not support reporting of the channel quality of the downlink carrier, or indicate that the terminal device does not report the downlink carrier channel quality report volume this time. For example, the plurality of bits in the MSG3 are set to a state. For example, the state is a state in which all of the plurality of bits are set to 0 (which is referred to as an all-0 state), in other words, the all-0 state of the plurality of bits is reserved, and it is specified that if the state of the plurality of bits is an all-zeroed state, it indicates that the terminal device does not support reporting of the channel quality of the downlink carrier, or it indicates that the terminal device does not report the channel quality of the downlink carrier this time. However, another state of the plurality of bits, that is, a non-all-0 state, can be used to indicate a corresponding downlink carrier channel quality report volume. In this case, if the terminal device determines that the terminal device does not support reporting of the channel quality of the downlink carrier or determines not to report the channel quality of the downlink carrier this time, the terminal device may set the plurality of bits in the MSG3 to an all-0 state. However, if the terminal device obtains the downlink carrier channel quality report volume through calculation, determines that the terminal device supports reporting of the channel quality of the downlink carrier, and determines to report the channel quality of the downlink carrier this time, the terminal device may set the plurality of bits to a corresponding state based on the downlink carrier channel quality report volume. In this case, if the terminal device needs to indicate the downlink carrier channel quality report volume to the network device, the state of the plurality of bits is a non-all-0 state.

Alternatively, the plurality of bits may be set to another relatively special state than the all-0 state that is relatively special. For example, the state is referred to as a preset state, and the preset state is a non-all-0 state. A specific value of the plurality of bits that corresponds to the preset state, that is, a specific non-all-0 state of the plurality of bits that the preset state represents, is not limited in this implementation of this disclosure. For example, the preset state is a state in which all of the plurality of bits are set to 1, or a state in which the plurality of bits are set to another value. The preset state may be used to indicate that the terminal device does not report the downlink carrier channel quality report volume this time. Alternatively, the preset state may be used for future extended application or represent that the measured downlink carrier channel quality report volume is outside a preset range. In this case, if the terminal device needs to indicate the downlink carrier channel quality report volume to the network device, the state of the plurality of bits is a non-all-0 state, and is not the preset state. In this case, all other states of the plurality of bits than the preset state may be considered as non-preset states. The preset state can be considered as a state, other than the all-0 state, that is unavailable to the downlink carrier channel quality report volume; and a non-preset and non-all-0 state can be considered as a state available to the downlink carrier channel quality report volume.

It should be noted that if the terminal device does not support reporting of a downlink carrier channel quality report volume, S41 is an unnecessary step for the terminal device. In other words, the terminal device directly generates the MSG3, and sets the state of the plurality of bits in the MSG to the all-0 state or the preset state. From this perspective, S41 is an optional step. In addition, according to the descriptions, the plurality of bits in the MSG3 sent by the terminal device and received by the network device in S42 may be in a non-all-0 and non-preset state, or may be in the all-0 state or the preset state. In other words, the MSG3 may be used to indicate the downlink channel quality report volume, or may be used to indicate that the terminal device does not support reporting of the channel quality of the downlink carrier, indicate that the terminal device does not report the channel quality of the downlink carrier this time, or indicate other extended application.

However, if the terminal device supports reporting of a downlink carrier channel quality report volume, the terminal device may still perform S41. After performing S41, the terminal device may perform evaluation based on the obtained downlink carrier channel quality report volume, to determine whether to report the downlink carrier channel quality report volume this time. If determining to report the downlink carrier channel quality report volume this time, the terminal device may set, according to the manner described above, the state of the plurality of bits in the MSG3 to a state corresponding to the downlink carrier channel quality report volume, to indicate the downlink channel quality report volume. If the terminal device determines not to report the downlink carrier channel quality report volume this time, the terminal device may set the state of the plurality of bits in the MSG to the all-0 state or the preset state. After the network device receives the MSG3, if determining that the state of the plurality of bits in the MSG3 is a non-all-0 and non-preset state, the network device may determine, based on the state of the plurality of bits, the downlink carrier channel quality report volume indicated by the terminal device. If the network device determines the state of the plurality of bits in the MSG3 is the all-0 state or the preset state, the network device may determine that the terminal device does not support reporting of the downlink carrier channel quality report volume or that the terminal device does not report the downlink carrier channel quality report volume this time, or determine another extended manner. Setting of the all-0 state can be construed as follows: If a preset condition is met, the terminal device sets the state of the plurality of bits to the all-0 state. For example, in a preset condition, when the downlink carrier is a non-anchor carrier, the state of the plurality of bits in the MSG3 is set to the all-zeroed state. For example, in another preset condition, the terminal device generates the downlink carrier channel quality report volume before generating the MSG3; and if determining that the downlink carrier channel quality report volume is outside a preset range, or determining that the downlink carrier channel quality report volume is less than a preset channel quality threshold, sets the state of the plurality of bits in the MSG3 to the all-zeroed state. Simply put, the all-0 state is used to indicate that the terminal device does not support reporting of the channel quality of the downlink carrier, or used to indicate that the terminal device does not report the channel quality of the downlink carrier this time. If determining that the state of the plurality of bits is the all-0 state, the network device can determine that the terminal device does not support reporting of the channel quality of the downlink carrier, or determine that the terminal device does not report the channel quality of the downlink carrier this time.

Under some preset conditions, the terminal device sets all of the plurality of bits in the MSG3 to 0. Under these preset conditions, the terminal device does not need to occupy a non-all-0 state of the plurality of bits in the MSG3. In this case, the terminal device may also perform reporting by using the all-0 state. This further saves a non-all-0 state, thereby achieving a finer reporting granularity of the downlink carrier channel quality report volume.

The terminal device may not support reporting of the channel quality of the downlink carrier because of a version or the like. However, concerning whether to report the channel quality of the downlink carrier this time, the terminal device may perform corresponding evaluation. For example, the terminal device may perform evaluation after obtaining the downlink carrier channel quality report volume, to determine whether to report the channel quality of the downlink carrier this time. For example, a preset range may be set in advance, or a channel quality threshold may be set in advance. If the downlink carrier channel quality report volume obtained by the terminal device is within the preset range, or the downlink carrier channel quality report volume obtained by the terminal device is greater than or equal to the preset channel quality threshold, the terminal device determines to indicate the downlink carrier channel quality report volume to the network device by using the MSG3. Alternatively, if the downlink carrier channel quality report volume obtained by the terminal device is outside the preset range, or the downlink carrier channel quality report volume obtained by the terminal device is less than the preset channel quality threshold, the terminal device determines not to report the downlink carrier channel quality report volume this time. This can be construed as follows: When the obtained downlink carrier channel quality report volume is outside the preset range, or the obtained downlink carrier channel quality report volume is less than the preset channel quality threshold, it indicates that downlink channel quality of the terminal device is relatively good. In this case, little impact may be created even if the network device does not consider the channel quality of the downlink carrier of the terminal device when determining an RSRP decision threshold. Therefore, in this case, the terminal device may choose not to report the downlink carrier channel quality report volume. In this case, the terminal device sets the plurality of bits in the MSG3 to the all-0 state. The preset range or the channel quality threshold may be stipulated by a protocol, or may be notified to the terminal device by the network device. This is not specifically limited.

Alternatively, if a downlink carrier corresponding to a random access resource used by the terminal device to send the MSG1 is a non-anchor carrier, that is, the downlink carrier for sending the MSG2 is a non-anchor carrier, the terminal device may also determine not to report the channel quality of the downlink carrier this time. In this case, the terminal device sets the plurality of bits in the MSG3 to the all-0 state.

It can be learned from the foregoing descriptions that if the terminal device determines not to report the channel quality of the downlink carrier this time, the terminal device may set the state of the plurality of bits in the MSG3 to the all-0 state. In other words, the plurality of bits in the all-0 state may indicate that the terminal device does not support reporting of the downlink channel quality, or indicate that the terminal device does not report the downlink channel quality this time.

It can be learned from the foregoing descriptions that if the terminal device determines that the downlink carrier channel quality report volume is outside the preset range, or is less than the configured channel quality threshold, the terminal device may set the state of the plurality of bits in the MSG3 to the non-all-0 preset state. In other words, the plurality of bits in the preset state can be considered as indicating that the downlink channel quality reported by the terminal device this time is outside the preset range or less than the channel quality threshold.

The MSG3 sent by the terminal device not only includes bits of a radio resource control (radio resource control, RRC) layer, but also includes bits of a media access control (media access control, MAC) layer. In this case, the bits used by the terminal device to indicate the downlink channel quality report volume may be the bits of the RRC layer or may be the bits of the MAC layer. The two cases are separately described below.

1. The plurality of bits used to indicate the downlink carrier channel quality report volume are the bits of the RRC layer.

The terminal device indicates the downlink carrier channel quality report volume by using the bits of the RRC layer in the MSG3. A value of the bits of the RRC layer in the MSG3 usually has been determined before the random access procedure starts. If the terminal device indicates the downlink carrier channel quality report volume by using the bits of the RRC layer in the MSG3, during obtaining of the downlink carrier channel quality report volume, the terminal device can obtain the downlink carrier channel quality report volume only by performing measurement on the downlink anchor carrier. Therefore, a process of measuring and obtaining the downlink carrier channel quality report volume needs to be performed before the random access procedure, and a process of measuring the downlink anchor carrier needs to be performed before the MSG1 is sent, so as to meet a requirement of indicating the downlink carrier channel quality report volume by using the bits of the RRC layer in the MSG3 can be met.

Moreover, the value of the bits of the RRC layer in the MSG3 cannot be modified in the entire random access procedure. Therefore, if the terminal device indicates the downlink carrier channel quality report volume by using the bits of the RRC layer in the MSG3, in the entire random access procedure, during MSG3 retransmission, or during MSG3 resending after MSG1 retransmission, modification of the downlink carrier channel quality report volume is not allowed. In other words, the entire random access procedure may last for a relatively short time, or may last for a relatively long time. Regardless of how long the random access procedure lasts, the downlink carrier channel quality report volume indicated by the terminal device by using the MSG3 is not changed in the entire random access procedure, and is always the downlink carrier channel quality report volume obtained through calculation before the random access procedure starts.

2. The plurality of bits used to indicate the downlink carrier channel quality report volume are the bits of the MAC layer.

The terminal device indicates the downlink carrier channel quality report volume by using the bits of the MAC layer in the MSG3. According to an existing stipulation, a value of the bits of the MAC layer in the MSG3 is determined after the terminal device receives the MSG2 for the first time in the random access procedure, and the bits of the MAC layer in the MSG3 cannot be modified subsequently in the random access procedure once the bits are set. During obtaining of the downlink carrier channel quality report volume, the terminal device obtains a downlink multicast channel quality report volume by performing measurement on a first carrier. The process may be performed after the terminal device sends the MSG1 for the first time.

However, the following problem that may arise has been considered in this implementation of this disclosure: In a random access procedure, a terminal device is allowed to make a plurality of random access attempts. In a random access attempt included in the random access procedure, when successfully receiving an RAR for the first time, the terminal device stores a MAC protocol data unit (protocol data unit, PDU) corresponding to an MSG3 in an MSG3 buffer (buffer), that is, stores MAC layer information corresponding to the MSG3 in the MSG3 buffer. The random access attempt in which the terminal device receives the RAR successfully for the first time may be the first random access attempt in the random access procedure, or may be a subsequent random access attempt in the random access procedure. A current random access attempt may fail due to reasons such as a conflict resolution failure, and a quantity of random access attempts has not exceeded a stipulated maximum quantity of attempts. In this case, the terminal device may make a random access attempt again; and in all subsequent random access attempts, the terminal device will continue to use the MAC PDU stored in the MSG3. In other words, a transport block (transport block, TB) for transmitting an MSG3 is not changed in the random access procedure.

According to this manner, if the terminal device indicates a downlink channel quality report volume by using an MSG3, this means that the downlink channel quality report volume is not changed in the random access procedure either. If a plurality of random access attempts are made in the random access procedure, the downlink channel quality report volume indicated by the MSG3 always corresponds to a downlink channel quality report volume obtained when the RAR is received successfully for the first time. Consequently, a downlink carrier channel quality report volume cannot reflect actual downlink channel quality of a downlink carrier after the random access procedure is completed.

FIG. 5 is a schematic diagram of two random access attempts in a same random access procedure. In the figure, a random access attempt 1 corresponds to a random access attempt in which a terminal device receives an RAR successfully for the first time. For example, a downlink carrier channel quality report volume indicated in an MSG3 is Q. After the random access attempt 1 fails, if a quantity of random access attempts has not reached a stipulated maximum quantity of random access attempts in the current random access procedure, the terminal device makes a random access attempt again. In a subsequent random access attempt 2, a downlink carrier channel quality report volume indicated by an MSG3 is not changed, and is still Q. A very long time may have elapsed from the random access attempt 1 to the random access attempt 2, but the downlink carrier channel quality report volume indicated to a network device by the terminal device is always a value obtained previously through calculation. Consequently, the downlink carrier channel quality report volume may be unable to reflect a channel attenuation status and the like in a subsequent random access attempt in a timely manner.

Considering this problem, it is proposed in this implementation of this disclosure that a downlink carrier channel quality report volume indicated by an MSG3 may be changed in a random access procedure.

For example, after generating a downlink carrier channel quality report volume and before sending an MSG3 to a network device, a terminal device may update the generated downlink carrier channel quality report volume. Specifically, after generating the downlink carrier channel quality report volume and before sending the MSG3 to the network device, the terminal device receives an MSG2 from the network device. In addition, an MSG3 buffer has stored a MAC PDU, and the MAC PDU includes a bit used to indicate the downlink carrier channel quality report volume. For example, the MAC PDU indicates the downlink carrier channel quality report volume by using a MAC CE. In this case, the terminal device may update the MAC CE that is included in the MAC PDU and that is used to indicate the downlink carrier channel quality report volume. In other words, the terminal device may update the downlink carrier channel quality report volume, adds an updated downlink carrier channel quality report volume to the MSG3, and then sends the MSG3 to the network device. In this manner, the downlink carrier channel quality report volume is updated, so that the downlink carrier channel quality report volume indicated by the terminal device can more accurately reflect a current channel attenuation status and the like in a relatively timely manner.

If a mechanism for updating the downlink carrier channel quality report volume is used, the terminal device receives the MSG2 from the network device, and the MSG3 buffer has stored the MAC PDU, where the MAC PDU includes the bit used to indicate the downlink carrier channel quality report volume. In this way, the terminal device may obtain a new downlink carrier channel quality report volume. For example, for a manner of obtaining the downlink carrier channel quality report volume, refer to the manner described above in this implementation. Alternatively, the new downlink carrier channel quality report volume may be calculated in another manner, and the downlink carrier channel quality report volume indicated by the MSG3 may be updated based on the new downlink carrier channel quality report volume obtained through calculation.

If such a mechanism for updating the downlink carrier channel quality report volume is applied, the terminal device may indicate the downlink carrier channel quality report volume by using the bits in the MAC layer of the MSG3, because if the terminal device indicates the downlink carrier channel quality report volume by using the bits in the RRC layer of the MSG3, it is still difficult to update the downlink carrier channel quality report volume in the random access procedure. For example, the downlink carrier channel quality report volume is calculated in the manner in the implementation shown in FIG. 3, that is, calculated based on the first number of repetitions and the second number of repetitions. In this case, the value of the bits of the MAC layer in the MSG3 may be determined after the MSG2 is received in the random access procedure, and is not changed in a subsequent step in the random access procedure. Alternatively, according to the solution proposed in this implementation of this disclosure, the value of the bits of the MAC layer in the MSG3 may be changed in the random access procedure.

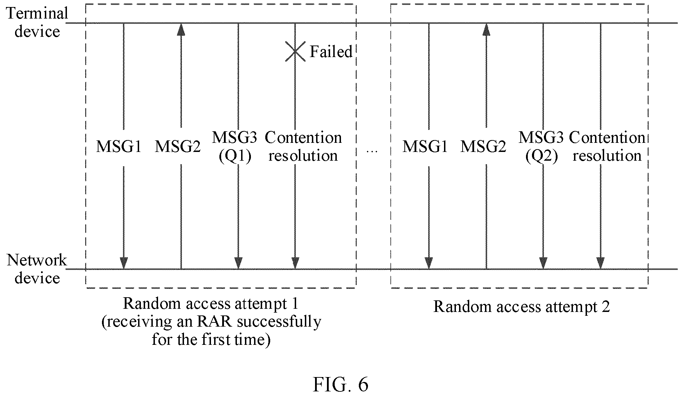

FIG. 6 is a schematic diagram of two random access attempts in a same random access procedure. In the figure, a random access attempt 1 corresponds to a random access attempt in which a terminal device receives an RAR successfully for the first time. For example, a downlink carrier channel quality report volume indicated in an MSG3 is Q1. After the random access attempt 1 fails, if a quantity of random access attempts has not reached a stipulated maximum quantity of random access attempts in the current random access procedure, the terminal device makes a random access attempt again. In a subsequent random access attempt 2, a downlink carrier channel quality report volume indicated by an MSG3 is changed, and is updated to Q2. In this way, the downlink carrier channel quality report volume Q2 can reflect a channel attenuation status and the like in the subsequent random access attempt in a relatively timely manner, so that the downlink carrier channel quality report volume obtained by the network device is more accurate.

As described above, the preset state of the plurality of bits in the MSG3 may be used for future extended application. In this case, an extension manner may be as follows: The terminal device indicates the downlink carrier channel quality report volume by using a non-all-0 state of the bits of the MAC layer or the bits of the RRC layer of the plurality of bits in a current version, where a preset non-all-0 state (that is, the preset state) represents support for future version extension. For example, in the current version, the terminal device and the network device never indicate the downlink carrier channel quality report volume by using the preset state; but in a future version, the terminal device may set the preset state to represent that the MSG3 further includes a plurality of extended bits, where the plurality of extended bits may be an extension of a function of the current version. For example, the plurality of extended bits may indicate a finer-grained downlink carrier channel quality report volume. In the future version, the network device determines, based on whether the preset state is used in the MSG3, whether to read the plurality of extended bits.

In addition, considering that the MSG3 not only may be used to indicate the downlink carrier channel quality report volume, but also may be used to indicate a power headroom level of an enhanced PH, if a quantity of idle bits in the MSG3 is less than a sum of a quantity of bits used to indicate the downlink carrier channel quality report volume and a quantity of bits used to indicate the power headroom level of the enhanced PH, a mechanism for determining how the MSG3 indicates the downlink carrier channel quality report volume and the power headroom level of the enhanced PH is needed. Related content will be detailed in the implementation shown in FIG. 7, and therefore, is not described herein. For details, refer to related descriptions in the implementation shown in FIG. 7 below.

In addition, in the implementation shown in FIG. 7, descriptions will be provided based on a concept of "downlink channel quality report volume". If the implementation shown in FIG. 7 is combined with the implementation shown in FIG. 3, the concept of "downlink channel quality report volume" in the implementation shown in FIG. 3 is the same as the concept of "downlink channel quality report volume" in the implementation shown in FIG. 7. If the implementation shown in FIG. 7 is combined with the implementation shown in FIG. 4, the concept of "downlink carrier channel quality report volume" in the implementation shown in FIG. 4 can be considered as the same as the concept of "downlink channel quality report volume" in the implementation shown in FIG. 7.

The implementations of this disclosure provide specific implementations on how a terminal device indicates a downlink carrier channel quality report volume by using an MSG3. This is more conducive to implementation by a person skilled in the art.

Besides the implementations described above, the following problem is further considered in the implementations of this disclosure: In a current NB-IoT system, a TB size of an MSG3 is fixedly 88 bits, so that a quantity of idle bits in the MSG3 is limited. Moreover, according to the solutions provided in the implementations of this disclosure, the idle bits in the MSG3 not only need to indicate a downlink channel quality report volume (or a downlink carrier channel quality report volume, where the concept of downlink channel quality report volume is used for description below), but also may need to indicate a power headroom level of an enhanced PH. For details about the enhanced PH, refer to descriptions above. Details are not described herein again. In this case, if the MSG3 not only needs to indicate the downlink channel quality report volume, but also needs to indicate the power headroom level of the enhanced PH, there are two cases. In one case, the quantity of the idle bits in the MSG3 is greater than or equal to a sum of a quantity of bits used to indicate the downlink channel quality report volume and a quantity of bits used to indicate the power headroom level of the enhanced PH, the downlink channel quality report volume and the power headroom level of the enhanced PH may be directly indicated by using the MSG3. However, if the quantity of the idle bits in the MSG3 is less than the sum of the quantity of bits used to indicate the downlink channel quality report volume and the quantity of bits used to indicate the power headroom level of the enhanced PH, a mechanism for determining how the MSG3 indicates the downlink channel quality report volume and the power headroom level of the enhanced PH is needed. In view of this, the implementations of this disclosure further provide a technical solution to resolve this problem.

As shown in FIG. 7, an implementation of this disclosure provides a third information sending and receiving method. The process of the method is described below.

S71. A terminal device determines to-be-sent information, where the to-be-sent information is one of a downlink channel quality report volume and a power headroom level, and the downlink channel quality report volume is used to represent downlink channel quality of the terminal device.

In this implementation of this disclosure, the terminal device may determine the to-be-sent information in a plurality of different manners. The following describes several optional manners.

1. Determine the to-be-sent information based on a priority.

The terminal device determines, as the to-be-sent information, one of the downlink channel quality report volume and the power headroom level that has a higher priority, where a priority of the downlink channel quality report volume is higher than a priority of the power headroom level, or the priority of the power headroom level is higher than the priority of the downlink channel quality report volume.

In other words, the priority of the downlink channel quality report volume and the priority of the power headroom level of the enhanced PH are stipulated in advance, and the terminal device reports the information that has a higher priority. For example, it is stipulated that the priority of the downlink channel quality report volume is higher than the priority of the power headroom level of the enhanced PH. In this case, the terminal device determines that the to-be-sent information is the downlink channel quality report volume. Alternatively, it is stipulated that the priority of the power headroom level of the enhanced PH is higher than the priority of the downlink channel quality report volume. In this case, the terminal device determines that the to-be-sent information is the power headroom level of the enhanced PH. If a priority of one type of information is higher, it indicates that the information may be more important. In this case, the terminal device chooses to report the information that has a higher priority, so that the important information can be transmitted in a relatively timely manner.

The priority of the downlink channel quality report volume and the priority of the power headroom level of the enhanced PH may be stipulated by a protocol, or may be notified to the terminal device by a network device. This is not specifically limited.

2. The to-be-sent information is indicated by using some bits of a plurality of bits in an MSG3.

Before sending, to a network device, an MSG3 in a random access procedure, the terminal device may set a state of some bits in the plurality of bits based on the to-be-sent information, where the state of the some bits is used to indicate that the to-be-sent information is the downlink channel quality report volume or the power headroom level.

In other words, the terminal device may choose to report the downlink channel quality report volume or the power headroom level. For example, the terminal device may choose the downlink channel quality report volume or the power headroom level randomly, or the terminal device may choose to report the downlink channel quality report volume and the power headroom level in turn. For example, the terminal device first chooses to report the downlink channel quality report volume, and next time, chooses to report the power headroom level. Alternatively, the terminal device may use another choosing manner. The choice is made by the terminal device. Therefore, the terminal device may indicate to the network device by using some bits in the plurality of bits, based on whether remaining bits of the plurality of bits in the MSG3 (remaining bits other than the some bits) indicate the downlink channel quality report volume or the power headroom level. For example, the state of the some bits may be used to indicate whether the to-be-sent information is the downlink channel quality report volume or the power headroom level. After receiving the MSG3, the network device may determine, based on the state of the some bits in the plurality of bits, whether the terminal device indicates the downlink channel quality report volume or the power headroom level by using the MSG3. In this way, the terminal device can be kept consistent with the network device.

A quantity of the some bits is 1, for example, or may be a larger number. A location of the some bits in the plurality of bits is not limited in this implementation of this disclosure either.

3. Determine the to-be-sent information based on an indication from a network device.

The network device sends indication information to the terminal device, and the terminal device receives the indication information from the network device. The terminal device can determine, based on the indication information, whether the to-be-sent information is the downlink channel quality report volume or the power headroom level.

In other words, the network device instructs, by using the indication information, the terminal device to report the downlink channel quality report volume or the power headroom level. The terminal device can determine, based on the indication information sent by the network device, whether to report the downlink channel quality report volume or the power headroom level. The indication information may be implemented by using a system message or implemented by using an MSG2 in a random access procedure, or may be implemented by using another message. In this way, the terminal device can be kept consistent with the network device. In addition, the information that the network device instructs the terminal device to report may be information just required by the network device, and the terminal device reporting the information based on the instruction from the network device can also make the reported information more compliant with a requirement of the network device.

The terminal device may obtain the downlink channel quality report volume in a manner provided in the implementations of this disclosure. For details, refer to related descriptions in the implementation shown in FIG. 3 or related descriptions about obtaining the downlink carrier channel quality report volume in the implementation shown in FIG. 4. Alternatively, the terminal device may obtain the downlink channel quality report volume in another manner. For example, the terminal device may directly use, as the downlink channel quality report volume, the first number of repetitions in the implementation shown in FIG. 3 or the implementation shown in FIG. 4. In this case, for a manner of obtaining the first number of repetitions by the terminal device, also refer to related descriptions in the implementation shown in FIG. 3 or the implementation shown in FIG. 4. Alternatively, the terminal device may obtain the downlink channel quality report volume in another manner that is not mentioned in the implementations of this disclosure. This is not specifically limited.

S72. The terminal device sends the MSG3 to the network device in the random access procedure, and the network device receives the MSG3 from the terminal device, where the plurality of bits in the MSG3 are used to indicate the to-be-sent information.

S73. The network device determines the to-be-sent information based on a state of the plurality of bits in the MSG3, where the to-be-sent information is one of the downlink channel quality report volume and the power headroom level, and the downlink channel quality report volume is used to represent the downlink channel quality of the terminal device.

The terminal device may send the MSG3 to the network device after determining the to-be-sent information, where the plurality of bits in the MSG3 are used to indicate the to-be-sent information, so that after receiving the MSG3, the network device can obtain the downlink channel quality report volume or the power headroom level indicated by the terminal device.

It can be learned from the foregoing descriptions that if both the downlink channel quality report volume and the power headroom level of the enhanced PH need to be reported, this implementation of this disclosure provides a solution, to avoid a conflict and ensure, as far as possible, that at least one of the downlink channel quality report volume and the power headroom level of the enhanced PH can be reported normally.

The implementation shown in FIG. 3, the implementation shown in FIG. 4, and the implementation shown in FIG. 7 that are described above may be considered as three independent implementations and implemented separately, or may be considered as an integral part in which content in the implementations can be mutually referenced and support each other.

With reference to the accompanying drawings, the following describes apparatuses provided in the implementations of this disclosure.

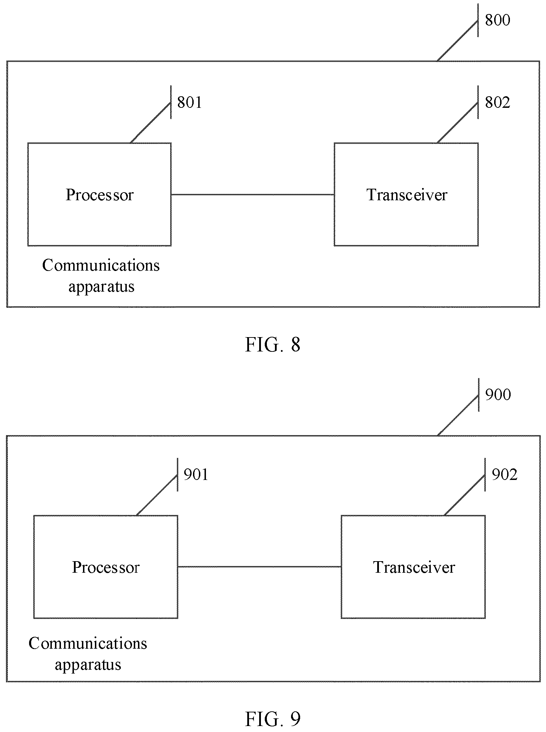

FIG. 8 is a schematic structural diagram of a communications apparatus 800. The communications apparatus 800 may implement a function of the terminal device described above. The communications apparatus 800 may be the terminal device described above, or may be a chip disposed in the terminal device described above. The communications apparatus 800 may include a processor 801 and a transceiver 802. For example, the transceiver 802 may be implemented through a radio frequency transceiver. The processor 801 may be configured to perform S31 in the implementation shown in FIG. 3, and/or configured to support another process of the technologies described in this specification. The transceiver 802 may be configured to perform S32 in the implementation shown in FIG. 3, and/or configured to support another process of the technologies described in this specification.

For example, the processor 801 is configured to generate a downlink channel quality report volume, where the downlink channel quality report volume is used to indicate a relative relationship between a first number of repetitions and a second number of repetitions, the first number of repetitions is a quantity of retransmissions that need to be performed in a preset downlink control channel format to achieve a preset block error rate, and the second number of repetitions is a number of repetitions corresponding to common search space of a downlink control channel carried on a downlink carrier.

The transceiver 802 is configured to send, to a network device, an MSG3 in a random access procedure, where the MSG3 is used to indicate the downlink channel quality report volume.

All related content in the steps in the foregoing method implementations can be cited in function descriptions of corresponding function modules. Details are not described herein again.

FIG. 9 is a schematic structural diagram of a communications apparatus 900. The communications apparatus 900 may implement a function of the network device described above. The communications apparatus 900 may be the network device described above, or may be a chip or another component disposed in the network device described above. The communications apparatus 900 may include a processor 901 and a transceiver 902. For example, the transceiver 902 may be implemented through a radio frequency transceiver. The processor 901 may be configured to perform S33 in the implementation shown in FIG. 3, and/or configured to support another process of the technologies described in this specification. The transceiver 902 may be configured to perform S32 in the implementation shown in FIG. 3, and/or configured to support another process of the technologies described in this specification.

For example, the transceiver 902 is configured to receive, from a terminal device, an MSG3 in a random access procedure.

The processor 901 is configured to obtain a downlink channel quality report volume indicated by the MSG3, where the downlink channel quality report volume is used to indicate a relative relationship between a first number of repetitions and a second number of repetitions, the first number of repetitions is a quantity of retransmissions that need to be performed in a preset downlink control channel format to achieve a preset block error rate, and the second number of repetitions is a number of repetitions corresponding to common search space of a downlink control channel carried on a downlink carrier.

All related content in the steps in the foregoing method implementations can be cited in function descriptions of corresponding function modules. Details are not described herein again.

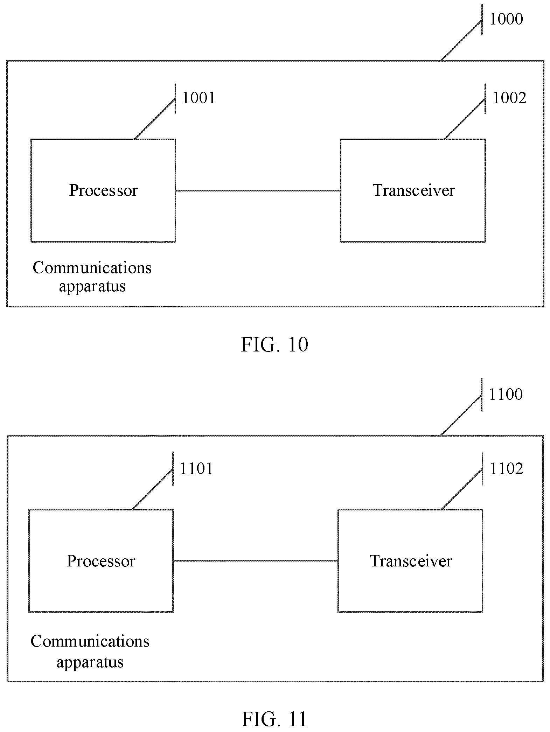

FIG. 10 is a schematic structural diagram of a communications apparatus 1000. The communications apparatus 1000 may implement a function of the terminal device described above. The communications apparatus 1000 may be the terminal device described above, or may be a chip or another component disposed in the terminal device described above. The communications apparatus 1000 may include a processor 1001 and a transceiver 1002. For example, the transceiver 1002 may be implemented through a radio frequency transceiver. The processor 1001 may be configured to perform S41 in the implementation shown in FIG. 4, and/or configured to support another process of the technologies described in this specification. The transceiver 1002 may be configured to perform S42 in the implementation shown in FIG. 4, and/or configured to support another process of the technologies described in this specification.

For example, the processor 1001 is configured to generate a downlink carrier channel quality report volume, where the downlink carrier channel quality report volume is used to represent channel quality of a downlink carrier.

The transceiver 1002 is configured to send, to a network device, an MSG3 in a random access procedure, where a plurality of bits in the MSG3 are used to indicate the downlink carrier channel quality report volume, and a state of the plurality of bits is a non-all-zeroed state.

Alternatively, for example, the processor 1001 is configured to: generate an MSG3 in a random access procedure, and set a state of a plurality of bits in the MSG3 to an all-zeroed state based on a preset condition, where the all-zeroed state is used to indicate that reporting of channel quality of a downlink carrier is not supported, or used to indicate that the channel quality of the downlink carrier is not reported this time.

The transceiver 1002 is configured to send the MSG3 to a network device.

All related content in the steps in the foregoing method implementations can be cited in function descriptions of corresponding function modules. Details are not described herein again.

FIG. 11 is a schematic structural diagram of a communications apparatus 1100. The communications apparatus 1100 may implement a function of the network device described above. The communications apparatus 1100 may be the network device described above, or may be a chip or another component disposed in the network device described above. The communications apparatus 1100 may include a processor 1101 and a transceiver 1102. For example, the transceiver 1102 may be implemented through a radio frequency transceiver. The processor 1101 may be configured to perform S43 in the implementation shown in FIG. 4, and/or configured to support another process of the technologies described in this specification. The transceiver 1102 may be configured to perform S42 in the implementation shown in FIG. 4, and/or configured to support another process of the technologies described in this specification.

For example, the transceiver 1102 is configured to receive, from a terminal device, an MSG3 in a random access procedure, where a state of a plurality of bits in the MSG3 is a non-all-zeroed state.

The processor 1101 is configured to determine, based on the state of the plurality of bits, a downlink carrier channel quality report volume indicated by the terminal device, where the downlink carrier channel quality report volume is used to represent channel quality of a downlink carrier.

Alternatively, for example, the transceiver 1102 is configured to receive, from a terminal device, an MSG3 in a random access procedure.

The processor 1101 is configured to: determine that a state of a plurality of bits in the MSG3 is an all-zeroed state; and determine, based on the all-zeroed state, that the terminal device does not support reporting of channel quality of a downlink carrier, or that the terminal device does not report the channel quality of the downlink carrier this time. All related content in the steps in the foregoing method implementations can be cited in function descriptions of corresponding function modules. Details are not described herein again.

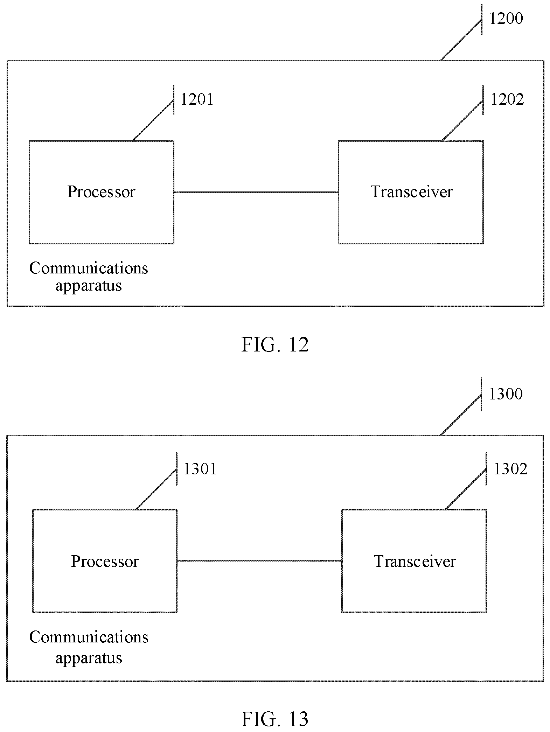

FIG. 12 is a schematic structural diagram of a communications apparatus 1200. The communications apparatus 1200 may implement a function of the terminal device described above. The communications apparatus 1200 may be the terminal device described above, or may be a chip or another component disposed in the terminal device described above. The communications apparatus 1200 may include a processor 1201 and a transceiver 1202. For example, the transceiver 1202 may be implemented through a radio frequency transceiver. The processor 1201 may be configured to perform S71 in the implementation shown in FIG. 7, and/or configured to support another process of the technologies described in this specification. The transceiver 1202 may be configured to perform S72 in the implementation shown in FIG. 7, and/or configured to support another process of the technologies described in this specification.

For example, the processor 1201 is configured to determine to-be-sent information, where the to-be-sent information is one of a downlink channel quality report volume and a power headroom level, and the downlink channel quality report volume is used to represent downlink channel quality.

The transceiver 1202 is configured to send, to a network device, an MSG3 in a random access procedure, where a plurality of bits in the MSG3 are used to indicate the to-be-sent information.

All related content in the steps in the foregoing method implementations can be cited in function descriptions of corresponding function modules. Details are not described herein again.

FIG. 13 is a schematic structural diagram of a communications apparatus 1300. The communications apparatus 1300 may implement a function of the network device described above. The communications apparatus 1300 may be the network device described above, or may be a chip or another component disposed in the network device described above. The communications apparatus 1300 may include a processor 1301 and a transceiver 1302. For example, the transceiver 1302 may be implemented through a radio frequency transceiver. The processor 1301 may be configured to perform S73 in the implementation shown in FIG. 7, and/or configured to support another process of the technologies described in this specification. The transceiver 1302 may be configured to perform S72 in the implementation shown in FIG. 7, and/or configured to support another process of the technologies described in this specification.

For example, the transceiver 1302 is configured to receive, from a terminal device, an MSG3 in a random access procedure.

The processor 1301 is configured to determine, based on a state of a plurality of bits in the MSG3, whether to-be-sent information indicated by the MSG3 is a downlink channel quality report volume or a power headroom level, where the downlink channel quality report volume is used to represent downlink channel quality of the terminal device. All related content in the steps in the foregoing method implementations can be cited in function descriptions of corresponding function modules. Details are not described herein again.

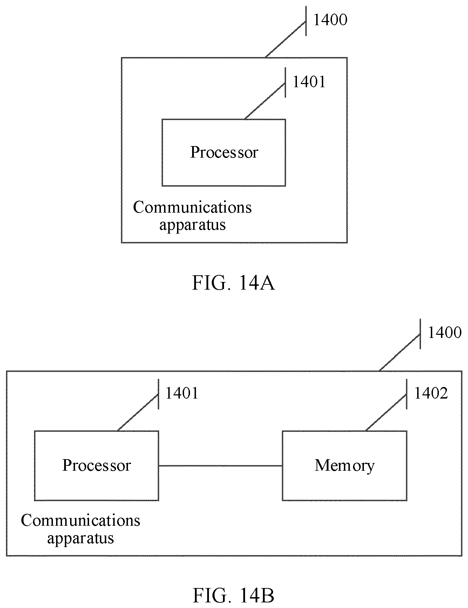

In a simple implementation, a person skilled in the art may figure out that the communications apparatus 800, the communications apparatus 900, the communications apparatus 1000, the communications apparatus 1100, the communications apparatus 1200, or the communications apparatus 1300 may be implemented through a structure of a communications apparatus 1400 shown in FIG. 14A. The communications apparatus 1400 may implement a function of the network device or the terminal device described above. The communications apparatus 1400 may include a processor 1401.

When the communications apparatus 1400 is configured to implement a function of the terminal device in the implementation shown in FIG. 3, the processor 1401 may be configured to perform S31 in the implementation shown in FIG. 3, and/or support another process of the technologies described in this specification. When the communications apparatus 1400 is configured to implement a function of the network device in the implementation shown in FIG. 3, the processor 1401 may be configured to perform S33 in the implementation shown in FIG. 3, and/or support another process of the technologies described in this specification.

When the communications apparatus 1400 is configured to implement a function of the terminal device in the implementation shown in FIG. 4, the processor 1401 may be configured to perform S41 in the implementation shown in FIG. 4, and/or support another process of the technologies described in this specification. When the communications apparatus 1400 is configured to implement a function of the network device in the implementation shown in FIG. 4, the processor 1401 may be configured to perform S43 in the implementation shown in FIG. 4, and/or support another process of the technologies described in this specification.

When the communications apparatus 1400 is configured to implement a function of the terminal device in the implementation shown in FIG. 7, the processor 1401 may be configured to perform S71 in the implementation shown in FIG. 7, and/or support another process of the technologies described in this specification. When the communications apparatus 1400 is configured to implement a function of the network device in the implementation shown in FIG. 7, the processor 1401 may be configured to perform S73 in the implementation shown in FIG. 7, and/or support another process of the technologies described in this specification.

The communications apparatus 1400 may be implemented through a field programmable gate array (field-programmable gate array, FPGA), an application-specific integrated chip (application specific integrated circuit, ASIC), a system on chip (system on chip, SoC), a central processing unit (central processor unit, CPU), a network processor (network processor, NP), a digital signal processing circuit (digital signal processor, DSP), a micro controller (micro controller unit, MCU), a programmable controller (programmable logic device, PLD), or another integrated chip. The communications apparatus 1400 may be disposed in the network device or the communications device in the implementations of this disclosure, to enable the network device or the communications device to implement the message transmission method provided in the implementations of this disclosure.

In an optional implementation, the communications apparatus 1400 may include a transceiver component, configured to communicate with another device. The transceiver component may also be understood as a communications interface, for example, a physical interface between the processor 1401 and a radio frequency transceiver apparatus. For example, when the communications apparatus 1400 is configured to implement a function of the network device or the terminal device in the implementation shown in FIG. 3, the transceiver component may be configured to perform S32 in the implementation shown in FIG. 3, and/or support another process of the technologies described in this specification. When the communications apparatus 1400 is configured to implement a function of the network device or the terminal device in the implementation shown in FIG. 4, the transceiver component may be configured to perform S42 in the implementation shown in FIG. 4, and/or support another process of the technologies described in this specification. When the communications apparatus 1400 is configured to implement a function of the network device or the terminal device in the implementation shown in FIG. 7, the transceiver component may be configured to perform S72 in the implementation shown in FIG. 7, and/or support another process of the technologies described in this specification.

In an optional implementation, the communications apparatus 1400 may further include a memory 1402. Referring to FIG. 14B, the memory 1402 is configured to store computer programs or instructions, and the processor 1401 is configured to decode and execute the computer programs or the instructions. It should be understood that these computer programs or instructions may include function programs of the foregoing network device or the foregoing terminal device. When the function programs of the network device are decoded and executed by the processor 1401, the network device can implement functions of the network device in the method provided in the implementation shown in FIG. 3, the implementation shown in FIG. 4, or the implementation shown in FIG. 7 in the implementations of this disclosure. When the function programs of the terminal device are decoded and executed by the processor 1401, the terminal device can implement functions of the terminal device in the method provided in the implementation shown in FIG. 3, the implementation shown in FIG. 4, or the implementation shown in FIG. 7 in the implementations of this disclosure.

In another optional implementation, these function programs of the network device or the terminal device are stored in a memory outside the communications apparatus 1400. When the function programs of the network device are decoded and executed by the processor 1401, the memory 1402 temporarily stores some or all of content of the function programs of the network device. When the function programs of the terminal device are decoded and executed by the processor 1401, the memory 1402 temporarily stores some or all of content of the function programs of the terminal device.

In another optional implementation, these function programs of the network device or the terminal device are stored in the memory 1402 inside the communications apparatus 1400. When the memory 1402 inside the communications apparatus 1400 stores the function programs of the network device, the communications apparatus 1400 may be disposed in the network device in the implementations of this disclosure. When the memory 1402 inside the communications apparatus 1400 stores the function programs of the terminal device, the communications apparatus 1400 may be disposed in the terminal device in the implementations of this disclosure.

In still another optional implementation, some content of these function programs of the network device is stored in a memory outside the communications apparatus 1400, and other content of these function programs of the network device is stored in the memory 1402 inside the communications apparatus 1400. Alternatively, some content of these function programs of the terminal device is stored in a memory outside the communications apparatus 1400, and other content of these function programs of the terminal device is stored in the memory 1402 inside the communications apparatus 1400.

In the foregoing implementations, the transceiver is configured to receive and send a specific signal. The processor is configured to control the transceiver to receive and send a signal and perform another processing function. Therefore, the transceiver is equivalent to an executor that receives and sends an air interface signal, and the processor is a controller that controls receiving and sending of the air interface signal, and is configured to schedule or control the transceiver to perform the receiving and sending. Driven by a software program or instruction in the memory, the processor controls the transceiver to receive and send various signals and implement the process of any one of the foregoing method implementations. Therefore, one or both of the processor or transceiver may be considered to be capable of performing receiving and sending on an air interface.

In the implementations of this disclosure, the communications apparatus 800, the communications apparatus 900, the communications apparatus 1000, the communications apparatus 1100, the communications apparatus 1200, the communications apparatus 1300, and the communications apparatus 1400 are presented in a form in which each function module is obtained through division based on each function, or may be presented in a form in which each function module is obtained through division in an integrated manner. The "module" herein may be an ASIC, a processor and a memory that execute one or more software or firmware programs, an integrated logic circuit, and/or another component that can provide the foregoing functions.

In addition, the communications apparatus 800 provided in the implementation shown in FIG. 8 may be alternatively implemented in another form. For example, the communications apparatus includes a processing module and a transceiver module. For example, the processing module may be implemented by the processor 801, and the transceiver module may be implemented by the transceiver 802. The processing module may be configured to perform S31 in the implementation shown in FIG. 3, and/or configured to support another process of the technologies described in this specification. The transceiver module may be configured to perform S32 in the implementation shown in FIG. 3, and/or configured to support another process of the technologies described in this specification.

For example, the processing module is configured to generate a downlink channel quality report volume, where the downlink channel quality report volume is used to indicate a relative relationship between a first number of repetitions and a second number of repetitions, the first number of repetitions is a quantity of retransmissions that need to be performed in a preset downlink control channel format to achieve a preset block error rate, and the second number of repetitions is a number of repetitions corresponding to common search space of a downlink control channel carried on a downlink carrier.

The transceiver module is configured to send, to a network device, an MSG3 in a random access procedure, where the MSG3 is used to indicate the downlink channel quality report volume.

All related content in the steps in the foregoing method implementations can be cited in function descriptions of corresponding function modules. Details are not described herein again.

The communications apparatus 900 provided in the implementation shown in FIG. 9 may be alternatively implemented in another form. For example, the communications apparatus includes a processing module and a transceiver module. For example, the processing module may be implemented by the processor 901, and the transceiver module may be implemented by the transceiver 902. The processing module may be configured to perform S33 in the implementation shown in FIG. 3, and/or configured to support another process of the technologies described in this specification. The transceiver module may be configured to perform S32 in the implementation shown in FIG. 3, and/or configured to support another process of the technologies described in this specification.

For example, the transceiver module is configured to receive, from a terminal device, an MSG3 in a random access procedure.

The processing module is configured to obtain a downlink channel quality report volume indicated by the MSG3, where the downlink channel quality report volume is used to indicate a relative relationship between a first number of repetitions and a second number of repetitions, the first number of repetitions is a quantity of retransmissions that need to be performed in a preset downlink control channel format to achieve a preset block error rate, and the second number of repetitions is a number of repetitions corresponding to common search space of a downlink control channel carried on a downlink carrier.

All related content in the steps in the foregoing method implementations can be cited in function descriptions of corresponding function modules. Details are not described herein again.

The communications apparatus 1000 provided in the implementation shown in FIG. 10 may be alternatively implemented in another form. For example, the communications apparatus includes a processing module and a transceiver module. For example, the processing module may be implemented by the processor 1001, and the transceiver module may be implemented by the transceiver 1002. The processing module may be configured to perform S41 in the implementation shown in FIG. 4, and/or configured to support another process of the technologies described in this specification. The transceiver module may be configured to perform S42 in the implementation shown in FIG. 4, and/or configured to support another process of the technologies described in this specification. For example, the processing module is configured to generate a downlink carrier channel quality report volume, where the downlink carrier channel quality report volume is used to represent channel quality of a downlink carrier.

The transceiver module is configured to send, to a network device, an MSG3 in a random access procedure, where a plurality of bits in the MSG3 are used to indicate the downlink carrier channel quality report volume, and a state of the plurality of bits is a non-all-zeroed state.

Alternatively, for example, the processing module is configured to: generate an MSG3 in a random access procedure, and set a state of a plurality of bits in the MSG3 to an all-zeroed state based on a preset condition, where the all-zeroed state is used to indicate that reporting of channel quality of a downlink carrier is not supported, or used to indicate that the channel quality of the downlink carrier is not reported this time.

The transceiver module is configured to send the MSG3 to a network device.

All related content in the steps in the foregoing method implementations can be cited in function descriptions of corresponding function modules. Details are not described herein again.

The communications apparatus 1100 provided in the implementation shown in FIG. 11 may be alternatively implemented in another form. For example, the communications apparatus includes a processing module and a transceiver module. For example, the processing module may be implemented by the processor 1101, and the transceiver module may be implemented by the transceiver 1102. The processing module may be configured to perform S43 in the implementation shown in FIG. 4, and/or configured to support another process of the technologies described in this specification. The transceiver module may be configured to perform S42 in the implementation shown in FIG. 4, and/or configured to support another process of the technologies described in this specification. For example, the transceiver module is configured to receive, from a terminal device, an MSG3 in a random access procedure, where a state of a plurality of bits in the MSG3 is a non-all-zeroed state.

The processing module is configured to determine, based on the state of the plurality of bits, a downlink carrier channel quality report volume indicated by the terminal device, where the downlink carrier channel quality report volume is used to represent channel quality of a downlink carrier.

Alternatively, for example, the transceiver module is configured to receive, from a terminal device, an MSG3 in a random access procedure.

The processing module is configured to: determine that a state of a plurality of bits in the MSG3 is an all-zeroed state; and determine, based on the all-zeroed state, that the terminal device does not support reporting of channel quality of a downlink carrier, or that the terminal device does not report the channel quality of the downlink carrier this time. All related content in the steps in the foregoing method implementations can be cited in function descriptions of corresponding function modules. Details are not described herein again.

The communications apparatus 1200 provided in the implementation shown in FIG. 12 may be alternatively implemented in another form. For example, the communications apparatus includes a processing module and a transceiver module. For example, the processing module may be implemented by the processor 1201, and the transceiver module may be implemented by the transceiver 1202. The processing module may be configured to perform S71 in the implementation shown in FIG. 7, and/or configured to support another process of the technologies described in this specification. The transceiver module may be configured to perform S72 in the implementation shown in FIG. 7, and/or configured to support another process of the technologies described in this specification. For example, the processing module is configured to determine to-be-sent information, where the to-be-sent information is one of a downlink channel quality report volume and a power headroom level, and the downlink channel quality report volume is used to represent downlink channel quality.

The transceiver module is configured to send, to a network device, an MSG3 in a random access procedure, where a plurality of bits in the MSG3 are used to indicate the to-be-sent information.

All related content in the steps in the foregoing method implementations can be cited in function descriptions of corresponding function modules. Details are not described herein again.

The communications apparatus 1300 provided in the implementation shown in FIG. 13 may be alternatively implemented in another form. For example, the communications apparatus includes a processing module and a transceiver module. For example, the processing module may be implemented by the processor 1301, and the transceiver module may be implemented by the transceiver 1302. The processing module may be configured to perform S73 in the implementation shown in FIG. 7, and/or configured to support another process of the technologies described in this specification. The transceiver module may be configured to perform S72 in the implementation shown in FIG. 7, and/or configured to support another process of the technologies described in this specification. For example, the transceiver module is configured to receive, from a terminal device, an MSG3 in a random access procedure.

The processing module is configured to determine, based on a state of a plurality of bits in the MSG3, whether to-be-sent information indicated by the MSG3 is a downlink channel quality report volume or a power headroom level, where the downlink channel quality report volume is used to represent downlink channel quality of the terminal device. All related content in the steps in the foregoing method implementations can be cited in function descriptions of corresponding function modules. Details are not described herein again.

The communications apparatus 800, the communications apparatus 900, the communications apparatus 1000, the communications apparatus 1100, the communications apparatus 1200, the communications apparatus 1300, and the communications apparatus 1400 provided in the implementations of this disclosure may be configured to perform the method provided in the implementation shown in FIG. 3, the implementation shown in FIG. 4, or the implementation shown in FIG. 7. Therefore, for technical effects that can be achieved by the communications apparatus 800, the communications apparatus 900, the communications apparatus 1000, the communications apparatus 1100, the communications apparatus 1200, the communications apparatus 1300, and the communications apparatus 1400, refer to the foregoing method implementations. Details are not described herein again.

The implementations of this disclosure are described with reference to the flowcharts and/or block diagrams of the method, the device (system), and the computer program product according to the implementations of this disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the other programmable data processing device generate an apparatus for implementing a specific function in one or more processes in the flowcharts and/or in one or more blocks in the block diagrams.

All or some of the foregoing implementations may be implemented by software, hardware, firmware, or any combination thereof. When software is used to implement the implementations, all or some of the implementations may be implemented in a form of a computer program product. The computer program product includes one or more computer instructions. When the computer program instructions are loaded and executed on a computer, the procedures or functions according to the implementations of this disclosure are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD), a semiconductor medium (for example, a solid-state drive (solid state disk, SSD)), or the like.

**Claims**

1.  An information sending method, comprising:

    sending, by a terminal device, a first message, MSG1, in a random access procedure, to a network device;
    generating (S31, S41), by the terminal device (800, 1000, 1200), a downlink channel quality report volume, wherein

- the downlink channel quality report volume is used to indicate a relative relationship between a first number of repetitions and a second number of repetitions,
- the first number of repetitions is a quantity of retransmissions that need to be performed in a first downlink control channel format to achieve a preset block error rate,
- the second number of repetitions is a number of repetitions for common search space of a downlink control channel carried on a downlink carrier, and
- the downlink carrier is a carrier for receiving a second message, MSG2, in a random access procedure; and

sending (S32, S42, S72), by the terminal device (800, 1000, 1200), to the network device (900, 1100, 1300), a third message, MSG3, in the random access procedure, wherein the MSG3 is used to indicate the downlink channel quality report volume,
wherein
before a first message, MSG1, in the random access procedure is sent, performing, by the terminal device (800, 1000, 1200), measurement on a downlink anchor carrier, to obtain the first number of repetitions, or
after a first MSG1 in the random access procedure is sent, performing, by the terminal device (800, 1000, 1200), measurement on the downlink carrier for receiving the MSG2 in the random access procedure, to obtain the first number of repetitions.

2. The method according to claim 1, wherein the MSG2 is a random access response message, the MSG3 is for setting up a radio resource control, RRC, connection.

3. The method according to claim 2, wherein
the second number of repetitions is a maximum number of repetitions for common search space of the downlink control channel carried on the downlink carrier.

4. The method according to any one of claims 1 to 3, wherein the MSG1 is a random access preamble.

5. The method according to any one of claims 1 to 4, wherein the first number of repetitions is obtained based on measurement on the downlink anchor carrier, and wherein the carrier for sending the MSG1 is the anchor carrier, and the downlink carrier for sending the MSG2 is also the downlink anchor carrier.

6. The method according to any one of claims 1 to 3, wherein the first number of repetitions is obtained based on measurement on the downlink carrier for sending the MSG2 in the random access procedure, and wherein the carrier for sending the MSG1 is a non-anchor carrier, and the downlink carrier for sending the MSG2 is a downlink anchor carrier or a downlink non-anchor carrier.

7. The method according to any one of claims 1 to 6, wherein
the relative relationship represents a ratio between the first number of repetitions and the second number of repetitions, and the downlink channel quality report volume is a quantized value of the ratio.

8. The method according to any one of claims 1 to 6, wherein
the relative relationship represents a value obtained by converting a ratio between the first number of repetitions and the second number of repetitions, and the downlink channel quality report volume is a quantized value of the value obtained through conversion.

9. The method according to any one of claims 1 to 8, wherein a plurality of bits in the MSG3 are used to indicate the downlink channel quality report volume, and the plurality of bits are in a non-all-zeroed state (S42).

10. The information receiving method according to claim 1, comprising:

receiving, by the network device (900, 1100, 1300), from the terminal device (800, 1000, 1200), the third message, MSG3, in the random access procedure; and
obtaining, by the network device (900, 1100, 1300), the downlink channel quality report volume indicated by the MSG3.

11. The method according to claim 10, wherein MSG2 is a random access response message, the MSG3 is for setting up a radio resource control, RRC, connection.

12. The method according to claim 10, wherein
the second number of repetitions is a maximum number of repetitions for common search space of the downlink control channel carried on the downlink carrier.

13. The method according to any one of claims 10 to 12, wherein
the relative relationship represents a ratio between the first number of repetitions and the second number of repetitions, and the downlink channel quality report volume is a quantized value of the ratio.

14. The method according to any one of claims 10 to 12, wherein
the relative relationship represents a value obtained by converting a ratio between the first number of repetitions and the second number of repetitions, and the downlink channel quality report volume is a quantized value of the value obtained through conversion.

15. The method according to any one of claims 10 to 14, wherein
a plurality of bits in the MSG3 are used to indicate the downlink channel quality report volume, and a state of the plurality of bits is a non-all-zeroed state.

16. A communications apparatus (800, 1000, 1200, 1400), which is
a communications apparatus (800, 1000, 1200, 1400), configured to perform the method according to any one of claims 1 to 9.

17. A computer-readable storage medium (1402) comprising instructions which, when executed by a computer, cause the computer to carry out the method steps of any of claims 1 to 9.

18. A communication system, comprising a terminal device (800, 1000, 1200, 1400) configured to perform the method according to any one of claims 1 to 9 and a network device (900, 1100, 1300, 1400) configured to perform the method according to any one of claims 10 to 15.

**Patentansprüche**

1. Informationssendeverfahren, umfassend:

Senden, durch ein Endgerät, einer ersten Nachricht, MSG1, an ein Netzwerkgerät in einer Direktzugriffsprozedur;
Erzeugen (S31, S41), durch das Endgerät (800, 1000, 1200), eines Downlink-Kanalqualitätsberichtsvolumens, wobei

- das Downlink-Kanalqualitätsberichtsvolumen verwendet wird, um eine relative Beziehung zwischen einer ersten Anzahl von Wiederholungen und einer zweiten Anzahl von Wiederholungen anzuzeigen,
- die erste Anzahl von Wiederholungen eine Menge an Neuübertragungen ist, die in einem ersten Downlink-Steuerkanalformat durchgeführt werden müssen, um eine voreingestellte Blockfehlerrate zu erreichen,
- die zweite Anzahl von Wiederholungen eine Anzahl von Wiederholungen für einen gemeinsamen Suchraum eines Downlink-Steuerkanals ist, der auf einem Downlink-Träger getragen wird, und
- der Downlink-Träger ein Träger zum Empfangen einer zweiten Nachricht, MSG2, in einer Direktzugriffsprozedur ist; und

Senden (S32, S42, S72), durch das Endgerät (800, 1000, 1200), einer dritten Nachricht, MSG3, an das Netzwerkgerät (900, 1100, 1300) in der Direktzugriffsprozedur, wobei die MSG3 dazu verwendet wird, das Downlink-Kanalqualitätsberichtvolumen anzuzeigen,
wobei
bevor eine erste Nachricht, MSG1, in der Direktzugriffsprozedur gesendet wird, Durchführen, durch das Endgerät (800, 1000, 1200), einer Messung auf einem Downlink-Ankerträger, um die erste Anzahl von Wiederholungen zu erlangen, oder
nachdem eine erste MSG1 in der Direktzugriffsprozedur gesendet wurde, Durchführen, durch das Endgerät (800, 1000, 1200), einer Messung auf dem Downlink-Träger zum Empfangen der MSG2 in der Direktzugriffsprozedur, um die erste Anzahl von Wiederholungen zu erlangen.

**2.** Verfahren nach Anspruch 1, wobei die MSG2 eine Direktzugriffsantwortnachricht ist und die MSG3 zum Einrichten einer Funkressourcensteuerungsverbindung, RRC-Verbindung, dient.

**3.** Verfahren nach Anspruch 2, wobei
die zweite Anzahl von Wiederholungen eine Höchstanzahl von Wiederholungen für einen gemeinsamen Suchraum des Downlink-Steuerkanals ist, der auf dem Downlink-Träger getragen wird.

**4.** Verfahren nach einem der Ansprüche 1 bis 3, wobei die MSG1 eine Direktzugriffspräambel ist.

**5.** Verfahren nach einem der Ansprüche 1 bis 4, wobei die erste Anzahl von Wiederholungen basierend auf einer Messung auf dem Downlink-Ankerträger erlangt wird und wobei der Träger zum Senden der MSG1 der Ankerträger ist und der Downlink-Träger zum Senden der MSG2 auch der Downlink-Ankerträger ist.

**6.** Verfahren nach einem der Ansprüche 1 bis 3, wobei die erste Anzahl von Wiederholungen basierend auf einer Messung auf dem Downlink-Träger zum Senden der MSG2 in der Direktzugriffsprozedur erlangt wird und wobei der Träger zum Senden der MSG1 kein Ankerträger ist und der Downlink-Träger zum Senden der MSG2 ein Downlink-Ankerträger oder kein Downlink-Ankerträger ist.

**7.** Verfahren nach einem der Ansprüche 1 bis 6, wobei
die relative Beziehung ein Verhältnis zwischen der ersten Anzahl von Wiederholungen und der zweiten Anzahl von Wiederholungen darstellt und das Downlink-Kanalqualitätsberichtsvolumen ein quantisierter Wert des Verhältnisses ist.

**8.** Verfahren nach einem der Ansprüche 1 bis 6, wobei
die relative Beziehung einen Wert darstellt, der durch Umwandeln eines Verhältnisses zwischen der ersten Anzahl von Wiederholungen und der zweiten Anzahl von Wiederholungen erlangt wird, und das Downlink-Kanalqualitätsberichtsvolumen ein quantisierter Wert des Werts ist, der durch die Umwandlung erlangt wurde.

**9.** Verfahren nach einem der Ansprüche 1 bis 8, wobei eine Vielzahl von Bits in der MSG3 dazu verwendet wird, das Downlink-Kanalqualitätsberichtsvolumen anzuzeigen, und sich die Vielzahl von Bits nicht alle in einem auf Null gesetzten Zustand befinden (S42).

**10.** Informationsempfangsverfahren nach Anspruch 1, umfassend:

Empfangen, durch das Netzwerkgerät (900, 1100, 1300), von dem Endgerät (800, 1000, 1200), der dritten Nachricht, MSG3, in der Direktzugriffsprozedur; und
Erlangen, durch das Netzwerkgerät (900, 1100, 1300), des Downlink-Kanalqualitätsberichtvolumens, das durch die MSG3 angezeigt wird.

**11.** Verfahren nach Anspruch 10, wobei die MSG2 eine Direktzugriffsantwortnachricht ist und die MSG3 zum Einrichten einer Funkressourcensteuerungsverbindung, RRC-Verbindung, dient.

**12.** Verfahren nach Anspruch 10, wobei
die zweite Anzahl von Wiederholungen eine Höchstanzahl von Wiederholungen für einen gemeinsamen Suchraum des Downlink-Steuerkanals ist, der auf dem Downlink-Träger getragen wird.

**13.** Verfahren nach einem der Ansprüche 10 bis 12, wobei
die relative Beziehung ein Verhältnis zwischen der ersten Anzahl von Wiederholungen und der zweiten Anzahl von Wiederholungen darstellt und das Downlink-Kanalqualitätsberichtsvolumen ein quantisierter Wert des Verhältnisses ist.

**14.** Verfahren nach einem der Ansprüche 10 bis 12, wobei
die relative Beziehung einen Wert darstellt, der durch Umwandeln eines Verhältnisses zwischen der ersten Anzahl von Wiederholungen und der zweiten Anzahl von Wiederholungen erlangt wird, und das Downlink-Kanalqualitätsberichtsvolumen ein quantisierter Wert des Werts ist, der durch die Umwandlung erlangt wurde.

**15.** Verfahren nach einem der Ansprüche 10 bis 14, wobei
eine Vielzahl von Bits in der MSG3 dazu verwendet wird, das Downlink-Kanalqualitätsberichtsvolumen anzuzeigen, und ein Zustand der Vielzahl von Bits ein nicht alle auf Null gesetzter Zustand ist.

16. Kommunikationsvorrichtung (800, 1000, 1200, 1400), die
eine Kommunikationsvorrichtung (800, 1000, 1200, 1400) ist, die dazu konfiguriert ist, das Verfahren nach einem der Ansprüche 1 bis 9 durchzuführen.

17. Computerlesbares Speichermedium (1402), umfassend Anweisungen, die, wenn sie durch einen Computer ausgeführt werden, den Computer veranlassen, die Verfahrensschritte nach einem der Ansprüche 1 bis 9 umzusetzen.

18. Kommunikationssystem, umfassend ein Endgerät (800, 1000, 1200, 1400), das dazu konfiguriert ist, das Verfahren nach einem der Ansprüche 1 bis 9 durchzuführen, und ein Netzwerkgerät (900, 1100, 1300, 1400), das dazu konfiguriert ist, das Verfahren nach einem der Ansprüche 10 bis 15 durchzuführen.

**Revendications**

1. Procédé d'envoi d'informations, comprenant :

l'envoi, par un dispositif terminal, d'un premier message, MSG1, dans une procédure d'accès aléatoire, à un dispositif de réseau ;
la génération (S31, S41), par le dispositif terminal (800, 1000, 1200), d'un volume de rapport de qualité de canal de liaison descendante, dans lequel

- le volume de rapport de qualité de canal de liaison descendante est utilisé pour indiquer une relation relative entre un premier nombre de répétitions et un second nombre de répétitions,
- le premier nombre de répétitions est une quantité de retransmissions qui doivent être réalisées dans un premier format de canal de commande de liaison descendante pour atteindre un taux d'erreur de bloc prédéfini,
- le second nombre de répétitions est un nombre de répétitions pour un espace de recherche commun d'un canal de commande de liaison descendante transporté sur une porteuse de liaison descendante, et
- la porteuse de liaison descendante est une porteuse destinée à recevoir un deuxième message, MSG2, dans une procédure d'accès aléatoire ; et

l'envoi (S32, S42, S72), par le dispositif terminal (800, 1000, 1200), au dispositif de réseau (900, 1100, 1300), d'un troisième message, MSG3, dans la procédure d'accès aléatoire, dans lequel le MSG3 est utilisé pour indiquer le volume de rapport de qualité de canal de liaison descendante,
dans lequel
avant qu'un premier message, MSG1, dans la procédure d'accès aléatoire ne soit envoyé, la réalisation, par le dispositif terminal (800, 1000, 1200), d'une mesure sur une porteuse d'ancrage de liaison descendante, pour obtenir le premier nombre de répétitions, ou
après qu'un premier MSG1 dans la procédure d'accès aléatoire est envoyé, la réalisation, par le dispositif terminal (800, 1000, 1200), d'une mesure sur la porteuse de liaison descendante pour recevoir le MSG2 dans la procédure d'accès aléatoire, pour obtenir le premier nombre de répétitions.

2. Procédé selon la revendication 1, dans lequel le MSG2 est un message de réponse d'accès aléatoire, le MSG3 est destiné à établir une connexion de commande de ressources radio, RRC.

3. Procédé selon la revendication 2, dans lequel
le second nombre de répétitions est un nombre maximal de répétitions pour un espace de recherche commun d'un canal de commande de liaison descendante transporté sur la porteuse de liaison descendante.

4. Procédé selon l'une quelconque des revendications 1 à 3, dans lequel le MSG1 est un préambule à accès aléatoire.

5. Procédé selon l'une quelconque des revendications 1 à 4, dans lequel le premier nombre de répétitions est obtenu sur la base d'une mesure sur la porteuse d'ancrage de liaison descendante, et dans lequel la porteuse destinée à envoyer le MSG1 est la porteuse d'ancrage, et la porteuse de liaison descendante destinée à envoyer le MSG2 est également la porteuse d'ancrage de liaison descendante.

**6.** Procédé selon l'une quelconque des revendications 1 à 3, dans lequel le premier nombre de répétitions est obtenu sur la base d'une mesure sur la porteuse de liaison descendante destinée à envoyer le MSG2 dans la procédure d'accès aléatoire, et dans lequel la porteuse destinée à envoyer le MSG1 est une porteuse non ancrée, et la porteuse de liaison descendante destinée à envoyer le MSG2 est une porteuse d'ancrage de liaison descendante ou une porteuse non ancrée de liaison descendante.

**7.** Procédé selon l'une quelconque des revendications 1 à 6, dans lequel
la relation relative représente un rapport entre le premier nombre de répétitions et le second nombre de répétitions, et
le volume de rapport de qualité de canal de liaison descendante est une valeur quantifiée du rapport.

**8.** Procédé selon l'une quelconque des revendications 1 à 6, dans lequel
la relation relative représente une valeur obtenue en convertissant un rapport entre le premier nombre de répétitions et le second nombre de répétitions, et le volume de rapport de qualité de canal de liaison descendante est une valeur quantifiée de la valeur obtenue par conversion.

**9.** Procédé selon l'une quelconque des revendications 1 à 8, dans lequel une pluralité de bits dans le MSG3 sont utilisés pour indiquer le volume de rapport de qualité de canal de liaison descendante, et la pluralité de bits sont dans un état non entièrement mis à zéro (S42).

**10.** Procédé de réception d'informations selon la revendication 1, comprenant :

la réception, par le dispositif de réseau (900, 1100, 1300), à partir du dispositif terminal (800, 1000, 1200), du troisième message, MSG3, dans la procédure d'accès aléatoire ; et
l'obtention, par le dispositif de réseau (900, 1100, 1300), du volume de rapport de qualité de canal de liaison descendante indiqué par le MSG3.

**11.** Procédé selon la revendication 10, dans lequel le MSG2 est un message de réponse d'accès aléatoire, le MSG3 est destiné à établir une connexion de commande de ressources radio, RRC.

**12.** Procédé selon la revendication 10, dans lequel
le second nombre de répétitions est un nombre maximal de répétitions pour un espace de recherche commun d'un canal de commande de liaison descendante transporté sur la porteuse de liaison descendante.

**13.** Procédé selon l'une quelconque des revendications 10 à 12, dans lequel
la relation relative représente un rapport entre le premier nombre de répétitions et le second nombre de répétitions, et
le volume de rapport de qualité de canal de liaison descendante est une valeur quantifiée du rapport.

**14.** Procédé selon l'une quelconque des revendications 10 à 12, dans lequel
la relation relative représente une valeur obtenue en convertissant un rapport entre le premier nombre de répétitions et le second nombre de répétitions, et le volume de rapport de qualité de canal de liaison descendante est une valeur quantifiée de la valeur obtenue par conversion.

**15.** Procédé selon l'une quelconque des revendications 10 à 14, dans lequel
une pluralité de bits dans le MSG3 sont utilisés pour indiquer le volume de rapport de qualité de canal de liaison descendante, et un état de la pluralité de bits est un état non entièrement mis à zéro.

**16.** Appareil de communication (800, 1000, 1200, 1400), qui est un appareil de communication (800, 1000, 1200, 1400), configuré pour réaliser le procédé selon l'une quelconque des revendications 1 à 9.

**17.** Support de stockage lisible par ordinateur (1402) comprenant des instructions qui, lorsqu'elles sont exécutées par un ordinateur, amènent l'ordinateur à réaliser les étapes du procédé selon l'une quelconque des revendications 1 à 9.

**18.** Système de communication, comprenant un dispositif terminal (800, 1000, 1200, 1400) configuré pour réaliser le procédé selon l'une quelconque des revendications 1 à 9 et un dispositif de réseau (900, 1100, 1300, 1400) configuré pour réaliser le procédé selon l'une quelconque des revendications 10 à 15.

FIG. 1

FIG. 2

FIG. 3

FIG. 4

FIG. 5

Terminal
device

Failed

MSG1    MSG2    MSG3    Contention         ...        MSG1    MSG2    MSG3    Contention
                (Q1)    resolution                                    (Q2)    resolution

Network
device

Random access attempt 1                                    Random access attempt 2
(receiving an RAR successfully
for the first time)

FIG. 6

```
┌─────────────────────┐                    ┌─────────────────────┐
│   Terminal device   │                    │   Network device    │
└─────────────────────┘                    └─────────────────────┘
          │                                           │
┌─────────────────────────────────┐                   │
│  S71. Determine to-be-sent       │                   │
│  information, where the          │                   │
│  to-be-sent information is one   │                   │
│  of a downlink channel quality   │                   │
│  report volume and a power       │                   │
│  headroom level, and the         │                   │
│  downlink channel quality        │                   │
│  report volume is used to        │                   │
│  represent downlink channel      │                   │
│  quality of the terminal device  │                   │
└─────────────────────────────────┘                   │
          │                                           │
          │   S72. MSG3 (where a plurality of bits    │
          │   in the MSG3 are used to indicate the    │
          │   to-be-sent information)                 │
          │──────────────────────────────────────────▶│
          │                                           │
          │        ┌──────────────────────────────────────────┐
          │        │  S73. Determine the to-be-sent            │
          │        │  information based on a state of the      │
          │        │  plurality of bits in the MSG3, where     │
          │        │  the to-be-sent information is one of     │
          │        │  the downlink channel quality report      │
          │        │  volume and the power headroom level,     │
          │        │  and the downlink channel quality         │
          │        │  report volume is used to represent       │
          │        │  the downlink channel quality of the      │
          │        │  terminal device                          │
          │        └──────────────────────────────────────────┘
          │                                           │
```

FIG. 7

800

Communications apparatus

801
Processor

802
Transceiver

FIG. 8

900

Communications apparatus

901
Processor

902
Transceiver

FIG. 9

1000

1001

Processor

1002

Transceiver

Communications
apparatus

FIG. 10

1100

1101

Processor

1102

Transceiver

Communications
apparatus

FIG. 11

1200

Processor 1201

Transceiver 1202

Communications
apparatus

FIG. 12

1300

Processor 1301

Transceiver 1302

Communications
apparatus

FIG. 13

1400

1401

Processor

Communications
apparatus

FIG. 14A

1400

1401

1402

Processor

Memory

Communications
apparatus

FIG. 14B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019151819 A1

**Non-patent literature cited in the description**

- **MEDIATEK INC**. CSI Reporting in Msg3 Random Access Procedure in NB-IoT. *R1-1804144*
- **HUAWEI et al.** *Location of Msg2 for RACH on SCell*